# EUROPEAN PATENT APPLICATION

(11) **EP 4 772 965 A1**
(43) Date of publication of application: **08.07.2026**
(21) Application number: 25753768.8
(22) Date of filing: 13.08.2025
(51) Int. Cl.: G06F 1/16

(54) **ELECTRONIC DEVICE INCLUDING HINGE**

(30) Priority: 11.11.2024 KR 20240159453; 29.11.2024 KR 20240175594
(71) Applicant: Samsung Electronics Co., Ltd., Suwon-si, Gyeonggi-do 16677 (KR)
(72) Inventor: KANG, Jaeho, Suwon-si, Gyeonggi-do 16677 (KR); KIM, Jinwoo, Suwon-si, Gyeonggi-do 16677 (KR)
(74) Representative: HGF
(86) International application number: PCT/KR2025/012302
(87) International publication number: WO 2026/100911

(57) **Abstract**

An electronic device according to an embodiment may comprise a foldable housing, a hinge structure, and a flexible display. The hinge structure may comprise a first shaft, a second shaft, a first gear including a first hollow portion and a first shaft extension protruding axially along the periphery of the first hollow portion, a second gear including a second hollow portion and a second shaft extension protruding axially along the periphery of the second hollow portion, a pair of idle gears arranged to mesh with the first gear and the second gear, and a gear bracket including a first gear insertion hole and a second gear insertion hole. The first shaft extension may move within the first gear insertion hole in a direction perpendicular to the axial direction of the first gear and toward the idle gears according to the rotational position of the first gear.

## Description

### [Technical Field]

The disclosure relates to an electronic device including a hinge.

### [Background Art]

Advancements and developments in information communication and semiconductor technologies accelerate the spread and use of various electronic devices. In particular, recent electronic devices are being developed to possess communication capabilities while being portable.

The term "electronic device" may refer to a device performing a particular function according to its equipped program, such as a home appliance, an electronic scheduler, a portable multimedia player, a mobile communication terminal, a tablet PC, an audio/video device, a desktop PC or laptop computer, an automotive navigation system. For example, electronic devices may output stored information as audio or video. As electronic devices become highly integrated (e.g., concentrated in small space), while the use of high-speed and large-volume transmission in wireless communication is becoming commonplace, an electronic device, such as a mobile communication terminal, may be equipped with various capabilities and functionalities. For example, an electronic device may be equipped with the integrated functionality, including an entertainment function, such as playing video games, a multimedia function, such as replaying music/videos, a communication and security function, such as for mobile banking, and a scheduling or e-wallet function. These electronic devices are being made smaller to be more conveniently portable to the users.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

An electronic device according to an embodiment may comprise a foldable housing including a first housing and a second housing, a hinge structure connecting the first housing and the second housing, and a flexible display supported by the first housing and the second housing. The hinge structure may comprise a first shaft, a second shaft, a first gear including a first hollow portion formed to allow the first shaft to pass therethrough and a first shaft extension protruding axially along the periphery of the first hollow portion, a second gear including a second hollow portion formed to allow the second shaft to pass therethrough and a second shaft extension protruding axially along the periphery of the second hollow portion, a pair of idle gears arranged to mesh with the first gear and the second gear between the first gear and the second gear, and a gear bracket including a first gear insertion hole formed to allow the first shaft extension to be inserted thereto and a second gear insertion hole formed to allow the second shaft extension to be inserted thereto. The first shaft extension may move within the first gear insertion hole in a direction perpendicular to the axial direction of the first gear and toward the idle gears according to the rotational position of the first gear.

An electronic device according to an embodiment may comprise a foldable housing including a first housing and a second housing, a hinge structure connecting the first housing and the second housing, and a flexible display supported by the first housing and the second housing. The hinge structure may comprise a first shaft, a second shaft, a first gear including a first hollow portion formed to allow the first shaft to pass therethrough and a first shaft extension protruding axially along the periphery of the first hollow portion, a second gear including a second hollow portion formed to allow the second shaft to pass therethrough and a second shaft extension protruding axially along the periphery of the second hollow portion, a pair of idle gears arranged to mesh with the first gear and the second gear between the first gear and the second gear, and a gear bracket including a first gear insertion hole formed to allow the first shaft extension to be inserted thereto and a second gear insertion hole formed to allow the second shaft extension to be inserted thereto. A circumference of the first gear insertion hole may form a first pressed portion and a first curved portion extending from two opposite ends of the first pressed portion, and an outer circumferential surface of the first shaft extension may include, in a cylindrical shape, a first recessed portion and a second recessed portion, which are spaced apart from each other, and a first pressing portion positioned between the first recessed portion and the second recessed portion. When the first pressing portion is positioned on the first pressed portion, the first gear may move toward the idle gear.

Effects achievable in example embodiments of the disclosure are not limited to the above-mentioned effects, but other effects not mentioned may be apparently derived and understood by one of ordinary skill in the art to which example embodiments of the disclosure pertain, from the following description. In other words, unintended effects in practicing embodiments of the disclosure may also be derived by one of ordinary skill in the art from example embodiments of the disclosure.

### [Brief Description of Drawings]

FIG. 1 is a block diagram illustrating an electronic device in a network environment according to an embodiment;
FIG. 2A is a front perspective view illustrating an electronic device in a first state according to an embodiment;
FIG. 2B is a rear perspective view illustrating an electronic device according to an embodiment;
FIG. 3 is a perspective view illustrating an electronic device in a second state according to an embodiment;
FIG. 4 is an exploded view illustrating a portion of an electronic device according to an embodiment;
FIG. 5 is a plan view illustrating a hinge module included in an electronic device according to an embodiment;
FIG. 6 is an exploded perspective view illustrating a hinge module included in an electronic device according to an embodiment;
FIG. 7 is a side view illustrating an arm of a hinge module according to an embodiment;
FIG. 8 is a view illustrating a gear of a hinge module according to an embodiment viewed in a direction P of FIG. 7;
FIG. 9 is a perspective view illustrating a bracket of a hinge module according to an embodiment;
FIG. 10 is a view illustrating a state in which a first gear, a second gear, and an idle gear are coupled to a bracket according to an embodiment;
FIGS. 11A, 11B, 11C, 11D, 11E, and 11F are views illustrating an operation of a hinge module according to an embodiment;
FIGS. 12A and 12B are views illustrating an example movement of a first gear during the operation of a hinge module according to an embodiment;
FIGS. 13A and 13B are exploded views illustrating a first arm, a second arm, and a support bracket of a hinge module according to an embodiment;
FIG. 14 is a view illustrating a state in which a first arm and a second arm are coupled to a support bracket of a hinge module according to an embodiment;
FIG. 15 is a plan view illustrating a hinge module of an electronic device according to an embodiment;
FIG. 16 is a perspective view illustrating the rotate bracket of FIG. 15 according to an embodiment;
FIGS. 17A and 17B are views illustrating a first arm, a second arm, and a cam portion in a hinge module according to an embodiment;
FIG. 18 is a front perspective view illustrating a multi-foldable electronic device in a first state according to an embodiment;
FIG. 19 is a rear perspective view illustrating a multi-foldable electronic device in a first state according to an embodiment;
FIG. 20 is a perspective view illustrating a multi-foldable electronic device in a second state according to an embodiment; and
FIG. 21 is an exploded perspective view illustrating a multi-foldable electronic device according to an embodiment.

Reference may be made to the accompanying drawings in the following description, and specific examples that may be practiced are shown as examples within the drawings. Other examples may be utilized and structural changes may be made without departing from the scope of the various examples.

### [Mode for the Invention]

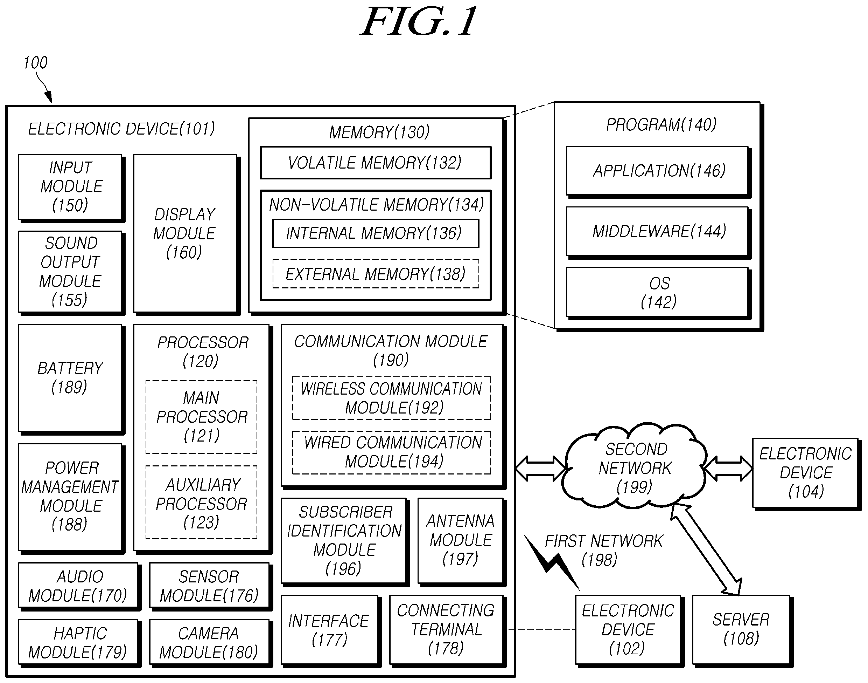

Various embodiments of the disclosure are merely exemplified herein with reference to FIGS. 1 to 21, to describe the principle of the disclosure, and should not be interpreted as limiting the scope of the disclosure. Those skilled in the art will understand that the principle of the disclosure may be implemented in any appropriately disposed system or device.

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference numerals may be used to refer to the same or similar elements throughout the specification and the drawings. Further, for clarity and brevity, no description is made of well-known functions and configurations in the drawings and relevant descriptions.

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. In an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, e.g., a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a lateral side) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

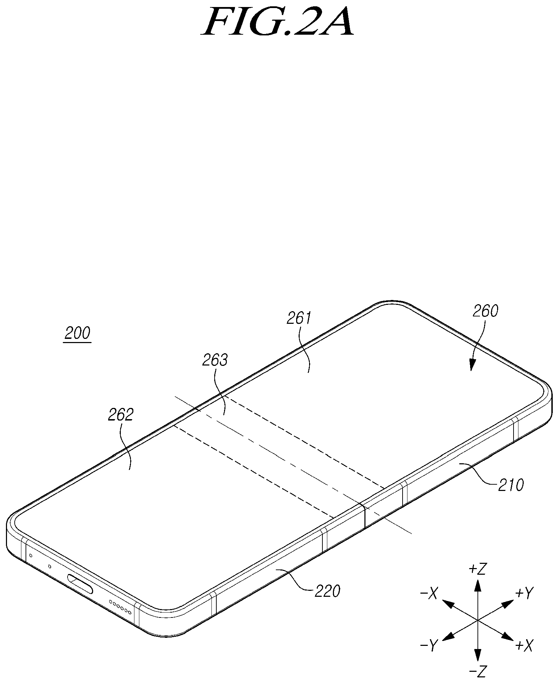

FIG. 2A is a front perspective view illustrating an electronic device in a first state according to an embodiment.

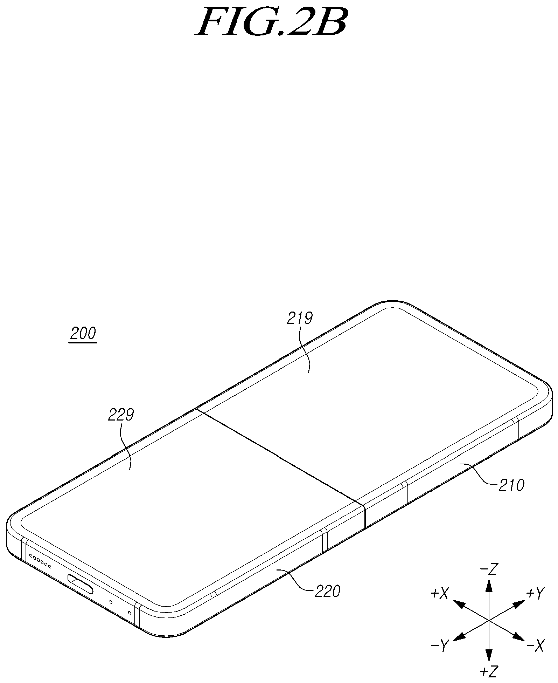

FIG. 2B is a rear perspective view illustrating an electronic device according to an embodiment.

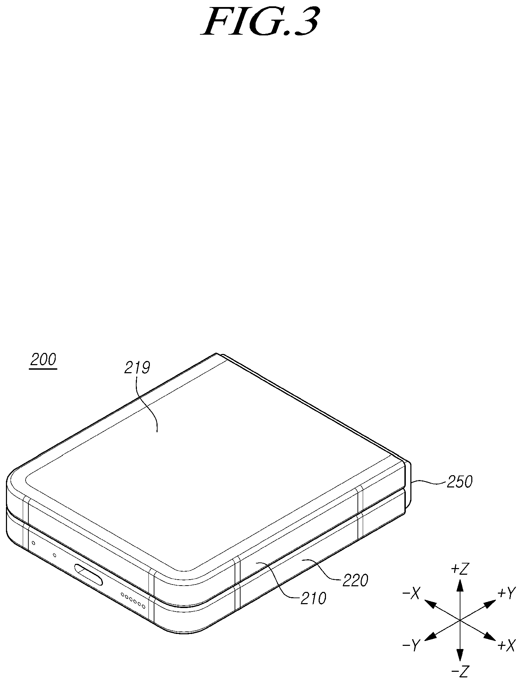

FIG. 3 is a perspective view illustrating an electronic device in a second state according to an embodiment.

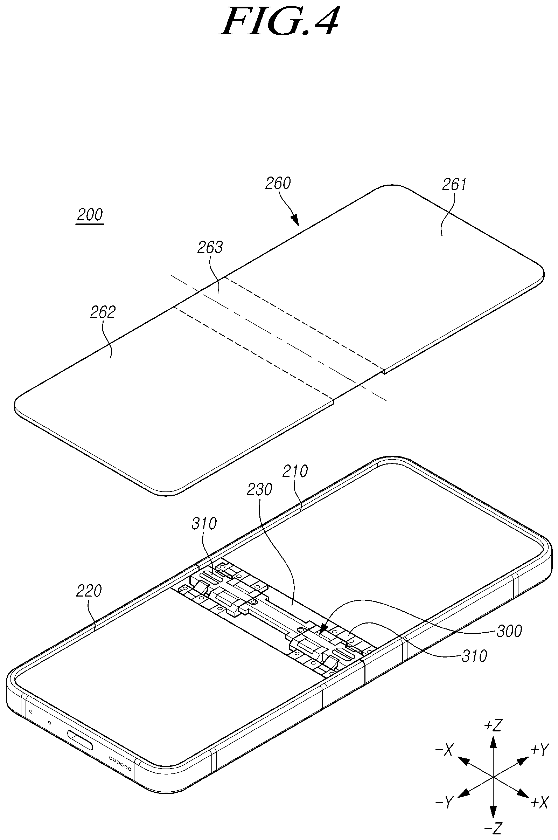

FIG. 4 is an exploded view illustrating a portion of an electronic device according to an embodiment.

All features, components, and/or arrangement relationships between components illustrated in FIGS. 2A, 2B, 3, and 4 may be included separately or in combination with the features, components, and arrangement relationships between components described in other drawings of the disclosure. Likewise, all features, components, and/or arrangement relationships between components described in connection with FIGS. 1 and 5 to 21 may be included separately or in combination with the features, components, and arrangement relationships between components described in connection with FIGS. 2A, 2B, 3, and 4.

Referring to FIGS. 2A, 2B, 3 and 4, an electronic device 200 (or a foldable electronic device), according to an embodiment, may include all or some (e.g. at least one) of a foldable housing 210, 220, a display 260 (e.g., a flexible display or foldable display), a hinge structure 300 (or a hinge part), or a hinge housing 230 (or a portion for accommodating a hinge or the hinge structure 300). The foldable housing 210, 220 may include a first housing 210 (or first housing portion) and a second housing 220 (or second housing portion). FIG. 2A is a perspective view illustrating a first state (e.g., a flat state, an unfolded state, or an expanded state) of an electronic device 200. FIG. 3 is a perspective view illustrating an electronic device 200 in a second state (e.g., a folded state, a closed state or a fully folded state).

Here, the first state may refer to a state in which the first housing 210 and the second housing 220 are positioned on the same plane. The angle formed between the first housing 210 and the second housing 220 in the first state is 180 degrees (i.e., substantially 180 degrees).

Here, the second state may refer to a state in which one side (e.g., surface) of the first housing 210 and one side (e.g., surface) of the second housing 220 face each other. A state in which the first housing 210 and the second housing 220 are superposed by the hinge structure 300 may be referred to as the second state.

According to an embodiment, the electronic device 200 may be folded in at least one of an in-folding method, an out-folding method, and an in/out-folding method. The in-folding method may be a method of inwardly folding the display 260, the out-folding method may be a method of outwardly folding the display 260 so that the first housing 210 and the second housing 220 face each other, and the in/out-folding method may be a method of folding a portion of the display 260 inward and the remaining portion of the display 260 outward. Hereinafter, an in-folding electronic device, in which the display 260 is folded inward, is described below as an example.

According to an embodiment, the electronic device 200 may include a first cover 219 covering the rear side portion of the first housing 210 and a second cover 229 covering the rear side portion of the second housing 220. In the second state, the first cover 219 and the second cover 229 may be disposed to face opposite directions to each other.

According to an embodiment, the display 260 may include a first area 261 (or first region, first portion), a second area 262 (or second region, second portion), and an intermediate area 263 (or intermediate region, intermediate portion). The first area 261 may be an area positioned on the front side of the first housing 210. The second area 262 may be an area positioned on the front side of the second housing 220. The intermediate area 263 may be an area positioned between the first area 261 and the second area 262. The first area 261 and the second area 262 may be spaced apart from each other with the intermediate area 263 interposed therebetween. When the electronic device 200 is in the second state, the first area 261 of the display 260 positioned on the front side of the first housing 210 may be folded to face the second area 262 of the display 260 positioned on the second housing 220. When the electronic device 200 is in the second state, the intermediate area 263 may be bent or folded.

According to an embodiment, at least a portion of the first housing 210 may be formed of a metal material, or at least a portion of the first housing 210 may be formed of a non-metal material. The first housing 210 may be formed of a material having a predetermined rigidity to support at least a portion of the display 260. The first area 261 and a portion of the intermediate area 263 of the display 260 may be disposed on the front side of the first housing 210. At least a portion of the front edge (e.g. a portion around the rim or circumference) of the first housing 210 may be attached to the edge (e.g. the rim or circumference) of the first area 261 of the display 260. Alternatively or additionally, a portion of the front side of the first housing 210 may be attached to the first area 261 of the display 260.

According to an embodiment, at least a portion of the second housing 220 may be formed of a metal material, or at least a portion of the second housing 220 may be formed of a non-metal material. The second housing 220 may be formed of a material having a predetermined rigidity to support at least a portion of the display 260. The second area 262 and a portion of the intermediate area 263 of the display 260 may be disposed on the front side of the second housing 220. At least a portion of the front edge (e.g. a portion around the rim or circumference) of the first housing 210 may be attached to the edge (e.g. the rim or circumference) of the second area 262 of the display 260. Alternatively or additionally, a portion of the front side of the second housing 220 may be attached to the second area 262 of the display 260.

A space (or volume, region, portion) for receiving electronic components may be formed inside the first housing 210 and/or the second housing 220. Electronic elements (e.g., a printed circuit board, a processor (e.g., the processor 120 of FIG. 1), memory (e.g., the memory 130 of FIG. 1), and a battery (e.g., the battery 189 of FIG. 1)) required for driving the display 260 may be disposed in the first housing 210 and/or the second housing 220.

According to an embodiment, the hinge structure 300 may be disposed to be connected to the first housing 210 and the second housing 220. The hinge structure 300 may be disposed to rotate the first housing 210 and/or the second housing 220 when the electronic device 200 operates between the first state and the second state. One side of the hinge structure 300 may be coupled to the first housing 210. The other side of the hinge structure 300 may be coupled to the second housing 220. The first housing 210 and the second housing 220 may be rotated around the hinge structure 300.

According to an embodiment, the hinge structure 300 may include at least one hinge module 310 (or hinge component). The hinge structure 300 may include a first hinge module 310 and a second hinge module 310. The first hinge module 310 and the second hinge module 310 may be disposed to be spaced apart from each other in the hinge housing 230. The number of hinge modules included in the hinge structure 300 is not limited thereto, and the hinge structure 300 may include three or more hinge modules.

According to an embodiment, the hinge housing 230 may be disposed to receive or accommodate the hinge structure 300. The hinge housing 230 may be disposed between the first housing 210 and the second housing 220. An edge portion of the first housing 210 facing the second housing 220 may include a recessed portion at least partially having a predetermined curvature so that at least a portion of the hinge housing 230 may be disposed or accommodated within. An edge portion of the second housing 220 facing the first housing 210 may include a recessed portion at least partially having a predetermined curvature so that at least a portion of the hinge housing 230 may be disposed or accommodated within.

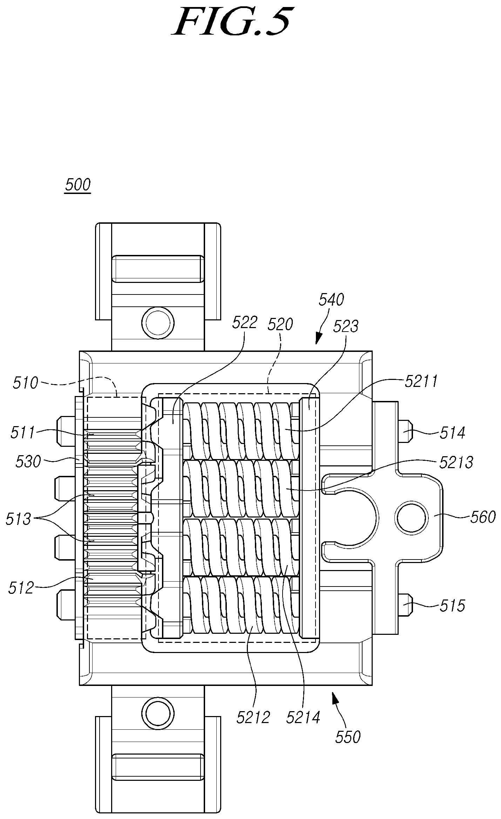

FIG. 5 is a plan view illustrating a hinge module included in an electronic device according to an embodiment.

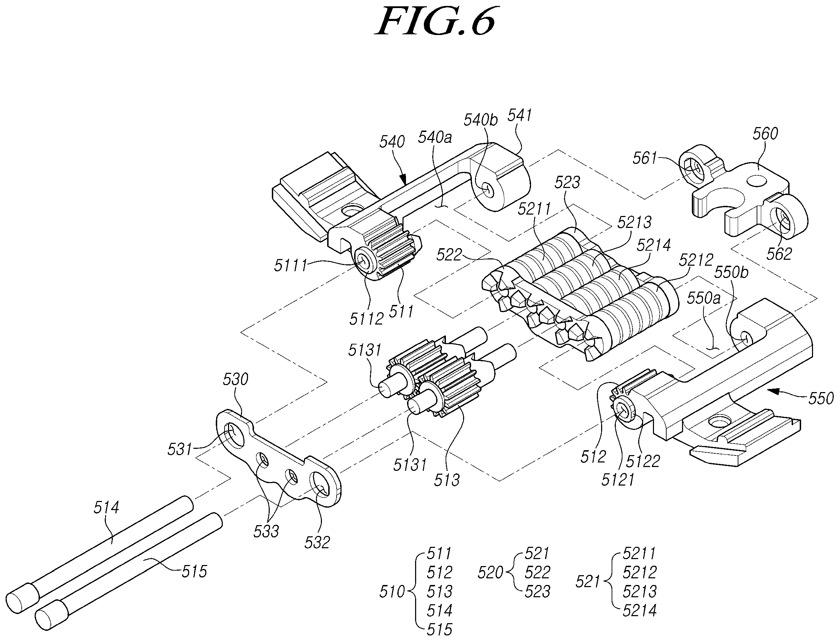

FIG. 6 is an exploded perspective view illustrating a hinge module included in an electronic device according to an embodiment.

All features, components, and/or arrangement relationships between components illustrated in FIGS. 5 and 6 may be included separately or in combination with the features, components, and arrangement relationships between components described in other drawings of the disclosure. Likewise, all features, components, and/or arrangement relationships between components described in connection with FIGS. 1 to 4 and 7 to 21 may be included separately or in combination with the features, components, and arrangement relationships between components described in connection with FIGS. 5 and 6.

The shape of the hinge module illustrated in FIGS. 5 and 6 is an example for convenience of description, and the structure, shape, and arrangement of the hinge module do not limit the scope of the disclosure.

Referring to FIG. 5, an electronic device (e.g., the electronic device 101 of FIG. 1 or the electronic device 200 of FIG. 2A) may include a hinge structure (e.g., the hinge structure 300 of FIG. 4). The hinge structure 300 may include at least one hinge module 500 (e.g., the hinge module 310 of FIG. 4). The hinge module 500 illustrated in FIG. 5 may be substantially the same as the hinge module of the hinge module 310 of FIG. 4.

According to an embodiment, the hinge module 500 may include at least one of a gear structure 510 (or gear arrangement), a support structure 520 (or first bracket), a gear bracket 530 (or second bracket), a first arm 540 (or first elongated element), a second arm 550 (or second elongated element), and a support bracket 560 (or third bracket). The hinge module 500 may support (e.g. facilitate, or allow) the electronic device 200 to be folded or unfolded in an intermediate state between the first state (e.g., the unfolded state) and the second state (e.g., the folded state) as well as the first state or the second state of the electronic device 200.

According to an embodiment, the gear structure 510 may be coupled to the first arm 540 and the second arm 550. The gear structure 510 may transfer (e.g., apply or provide) force (e.g., power) so that the second housing (e.g., the first housing 210 of FIG. 2A) rotates together when the first housing (e.g., the first housing 210 of FIG. 2A) rotates. The gear structure 510 may transfer a force so that the second arm 550 rotates together when the first arm 540 rotates. The gear structure 510 may be configured to support the simultaneous hinge operation of the first housing 210 and the second housing 220. The gear structure 510 may prevent torsion between the first housing 210 and the second housing 220 by allowing the first housing 210 and the second housing 220 to move together.

According to an embodiment, the gear structure 510 may include a plurality of gears (e.g. a first set of gears) and idle gears (e.g. a second set of gears). The first arm 540 and the second arm 550 may be rotated together by rotation of the gears of the gear structure 510. The first arm 540 and the second arm 550 may be symmetrically rotated with respect to the center line of the hinge module 500 by the gear structure 510.

According to an embodiment, the gear structure 510 may include a first gear 511, a second gear 512, an idle gear 513 (or third gear), a first shaft 514, and a second shaft 515.

According to an embodiment, the first gear 511 may include a first hollow portion 5111 (or first opening) and a first shaft extension 5112 (or first shaft portion, protrusion, guide). The first gear 511 may be disposed to be engaged with the idle gear 513. According to an embodiment, the first hollow portion 5111 may be formed so that the first shaft 514 passes therethrough.

According to an embodiment, the first gear 511 may be coupled to the first arm 540. The first gear 511 may be coupled to be rotated with the first arm 540. The first arm 540 may be rotated around a rotational axis of the first gear 511. The first gear 511 may be integrally formed with the first arm 540, but is not limited thereto, and may be separately manufactured and then coupled to the first arm 540.

According to an embodiment, the first shaft extension 5112 may be a portion formed to extend in the axial direction from the first gear 511. The first shaft extension 5112 may protrude in the axial direction along the periphery of the first hollow portion 5111. The first shaft extension 5112 may extend from an edge defining the first hollow portion 5111 in the axial direction of the first gear 511. The first shaft extension 5112 may be formed to surround the circumference of the first shaft 514. The first shaft extension 5112 may have a substantially ring-shaped cross section.

According to an embodiment, the first gear 511 may receive a force from the rotational operation of the first housing (e.g., the first housing 210 of FIG. 2A). In the case that the user folds (e.g., closes) or unfolds (e.g., opens) the electronic device 200 between the first state and the second state, the first gear 511 may be rotated.

According to an embodiment, the second gear 512 may include a second hollow portion 5121 (or second opening) and a second shaft extension 5122 (or second shaft portion, protrusion, guide). The second gear 512 may be disposed to be engaged with the idle gear 513. According to an embodiment, the second hollow portion 5121 may be formed to allow the second shaft 515 to pass therethrough.

According to an embodiment, the second gear 512 may be coupled to the second arm 550. The second gear 512 may be coupled to be rotated together with the second arm 550. The second arm 550 may be rotated around the rotational axis of the second gear 512. The second gear 512 may be integrally formed with the second arm 550, but is not limited thereto, and may be separately manufactured and then coupled to the second arm 550.

According to an embodiment, the second shaft extension 5122 may be a portion formed to extend in the axial direction from the second gear 512. The second shaft extension 5122 may protrude in the axial direction along the periphery of the second hollow portion 5121. The second shaft extension 5122 may extend from an edge defining the second hollow portion 5121 in the axial direction of the second gear 512. The second shaft extension 5122 may be formed to surround the circumference of the second shaft 515. The second shaft extension 5122 may have a substantially ring-shaped cross section.

According to an embodiment, the second gear 512 may receive a force from the rotational operation of the second housing (e.g., the second housing 220 of FIG. 2A). When the user folds or unfolds the electronic device 200 between the first state and the second state, the second gear 512 may be rotated.

According to an embodiment, the idle gear 513 may be disposed between the first gear 511 and the second gear 512. The idle gear 513 may be disposed to be engaged with the first gear and the second gear 512.

According to an embodiment, a pair of idle gear 513 may be configured. The pair of idle gears 513 engaged with each other may be engaged with the first gear 511 and the second gear 512, respectively.

According to an embodiment, when one of the first gear 511 or the second gear 512 is rotated, the idle gear 513 may be configured to transfer (e.g., provide) rotational power to the other of the first gear 511 or the second gear 512. The idle gear 513 may be configured to transfer the power of the first gear 511 to the second gear 512 or transfer the power of the second gear 512 to the first gear 511 as an intermediate medium. The first gear 511 and the second gear 512 coupled to the idle gear 513 may rotate in opposite directions.

According to an embodiment, the first shaft 514 may be disposed to sequentially pass through the gear bracket 530, the first gear 511, the first cam 522, the first elastic member 5211, the support plate 523, and the first arm hole 540b. The first shaft 514 may be disposed to pass through the first hollow portion 5111 of the first gear 511. The first shaft 514 may be disposed to pass through the first shaft extension 5112 of the first gear 511. The length direction of the first shaft 514 may be substantially parallel to an extending direction of the first shaft extension 5112.

According to an embodiment, the second shaft 515 may be disposed to sequentially pass through the gear bracket 530, the second gear 512, the first cam 522, the second elastic member 5212, the support plate 523, and the second arm hole 550b. The second shaft 515 may be disposed to pass through the second hollow portion 5121 of the second gear 512. The second shaft 515 may be disposed to pass through the second shaft extension 5122 of the second gear 512. The length direction of the second shaft 515 may be substantially parallel to the extending direction of the second shaft extension 512. The first cam 522 and the support plate 523 may together be referred to as a cam portion 522, 523.

According to an embodiment, the support structure 520 may be disposed to be fixed in a hinge housing (e.g., the hinge housing 230 of FIG. 4). The support structure 520 may be configured to provide a designated pressure to the first arm 540 and the second arm 550. The support structure 520 may include at least one elastic body to support the cam operation by pushing the cam portion 522, 523 of the support structure 520 toward the first arm 540 and the second arm 550 based on the elastic force of the elastic body to be engaged with the rotation cam structures of the first arm 540 and the second arm 550.

According to an embodiment, the support structure 520 may include a plurality of elastic members 521 and the cam portion 522, 523.

According to an embodiment, the plurality of elastic members 521 may include at least one of a first elastic member 5211, a second elastic member 5212, a third elastic member 5213, and a fourth elastic member 5214. At least one of the first elastic member 5211, the second elastic member 5212, the third elastic member 5213, and the fourth elastic member 5214 may be a spring.

According to an embodiment, the first elastic member 5211 may be disposed to extend in the axial direction of the first gear 511. The first elastic member 5211 may be formed to allow the first shaft 514 to pass therethrough.

According to an embodiment, the second elastic member 5212 may be disposed to extend in the axial direction of the second gear 512. The second elastic member 5212 may be formed to allow the second shaft 515 to pass therethrough.

According to an embodiment, the third elastic member 5213 and the fourth elastic member 5214 may be disposed to extend in the axial direction of the pair of idle gears 513, respectively. The third elastic member 5213 and the fourth elastic member 5214 may be disposed adjacent to each other. The third elastic member 5213 may be disposed between the first elastic member 5211 and the fourth elastic member 5214. The fourth elastic member 5214 may be disposed between the second elastic member 5212 and the third elastic member 5213. According to an embodiment, the configurations of the third elastic member 5213 and the fourth elastic member 5214 may be omitted from the hinge module 500.

According to an embodiment, the cam portion 522, 523 may include a first cam 522 and a support plate 523. The first cam 522 may be coupled to one end of the plurality of elastic members 521. The support plate 523 may be coupled to the other end of the plurality of elastic members 521. The first cam 522 and the support plate 523 may be disposed to be spaced apart from each other with the plurality of elastic members 521 interposed therebetween. The first cam 522 and the support plate 523 may be disposed to be substantially parallel to each other.

According to an embodiment, the first cam 522 may be disposed to be adjacent to at least one of the first gear 511, the second gear 512, and the idle gear 513. The first cam 522 may include a plurality of holes through which the first shaft 514 and the second shaft 515 pass.

According to an embodiment, the support plate 523 may be disposed adjacent to at least one of the first arm hole 540b of the first arm 540, the second arm hole 550b of the second arm 550, and the support bracket 560. The support plate 523 may include a plurality of holes through which the first shaft 514 and the second shaft 515 pass. The support plate 523 may be replaced with a second cam that supports the plurality of elastic members 521 and is disposed on the opposite side of the first cam 522.

According to an embodiment, the gear bracket 530 may include a first gear insertion hole 531 (e.g. a first hole, or first gear guide), a second gear insertion hole 532 (e.g. a second hole, or second gear guide), and a plurality of idle gear insertion holes 533 (e.g. third holes, or idle gear guides). The gear bracket 530 may be disposed to be spaced apart from the support bracket 560. The gear bracket 530 and the support bracket 560 may be spaced apart from each other with the support structure 520 and the gear structure 510 interposed therebetween.

According to an embodiment, the first gear insertion hole 531 may be formed to allow the first shaft extension 5112 of the first gear 511 to be inserted thereto. The first gear insertion hole 531 may be formed to allow the first shaft 514 to pass therethrough. The first gear insertion hole 531 may be formed to allow the first shaft 514 and the first shaft extension 5112 surrounding the first shaft 514 to be inserted thereto.

According to an embodiment, the second gear insertion hole 532 may be formed to allow the second shaft extension 5122 of the second gear 512 to be inserted thereto. The second gear insertion hole 532 may be formed to allow the second shaft 515 to pass therethrough. The second gear insertion hole 532 may be formed to allow the second shaft 515 and the second shaft extension 5122 surrounding the second shaft 515 to be inserted thereto.

According to an embodiment, a plurality of idle gear insertion holes 533 may be disposed between the first gear insertion hole 531 and the second gear insertion hole 532. The plurality of idle gear insertion holes 533 may be formed to allow the shaft extension(s) 5131 of the idle gear(s) 513 to be inserted thereto.

According to an embodiment, the first arm 540 may form a first receiving portion 540a. A portion of the support structure 520 may be received in the first receiving portion 540a. The first arm 540 may be coupled to the first gear 511 so as to rotate together according to the rotation of the first gear 511. The first arm 540 may be referred to as a first rotating body.

According to an embodiment, the first arm 540 may include a first arm hole 540b. The first arm hole 540b may be formed to allow the first shaft 514 to pass therethrough. The first arm hole 540b may be positioned in a way that an imaginary line extending from the rotational axis of the first gear 511 may pass therethrough. The shape of the first arm hole 540b may be substantially the same as the shape of the first hollow portion 5111 of the first gear 511.

According to an embodiment, the first arm 540 may include a first arm extension 541. The first arm extension 541 may extend along the axial direction of the first gear 511 or the length direction of the first shaft 514. The first arm extension 541 may protrude in a direction opposite to a direction toward the first gear 511. The first arm extension 541 may extend in a direction toward the support bracket 560. The first arm extension 541 may protrude in the axial direction of the first gear 511 or the length direction of the first shaft 514 along the periphery of the first arm hole 540b. The first arm extension 541 may extend from an edge defining the first arm hole 540b along the axial direction of the first gear 511 or the length direction of the first shaft 514. The first arm extension 541 may be formed to surround the circumference of the first shaft 514. The first arm extension 541 may have a substantially ring-shaped cross section.

According to an embodiment, the second arm 550 may form a second receiving portion 550a. A portion of the support structure 520 may be received in the second receiving portion 550a. The second arm 550 may be coupled to the second gear 512 to rotate together according to the rotation of the second gear 512. The second arm 550 may be referred to as a second rotating body.

According to an embodiment, the second arm 550 may include a second arm hole 550b. The second arm hole 550b may be formed to allow the second shaft 515 to pass therethrough. The second arm hole 550b may be positioned in a way that an imaginary line extending from the rotational axis of the second gear 512 may pass therethrough. The shape of the second arm hole 550b may be substantially the same as the shape of the second hollow portion 5121 of the second gear 512.

According to an embodiment, the second arm 550 may include a second arm extension 551. The second arm extension 551 may extend along the axial direction of the second gear 512 or the length direction of the second shaft 515. The second arm extension 551 may protrude in a direction opposite to a direction toward the second gear 512. The second arm extension 551 may extend in a direction toward the support bracket 560. The second arm extension 551 may protrude in the axial direction of the second gear 512 or the length direction of the second shaft 515 along the periphery of the second arm hole 550b. The second arm extension 551 may extend in the axial direction of the second gear 512 or the length direction of the second shaft 515 from an edge defining the second arm hole 550b. The second arm extension 551 may be formed to surround the circumference of the second shaft 515. The second arm extension 551 may have a substantially ring-shaped cross section.

According to an embodiment, the support bracket 560 may include a first arm insertion hole 561 and a second arm insertion hole 562. The first arm insertion hole 561 may be formed to allow the first arm extension 541 to be inserted thereto. The second arm insertion hole 562 may be formed to allow the second arm extension 551 to be inserted thereto. The first shaft 514 may be disposed to pass through the first arm insertion hole 561. The second shaft 515 may be disposed to pass through the second arm insertion hole 562.

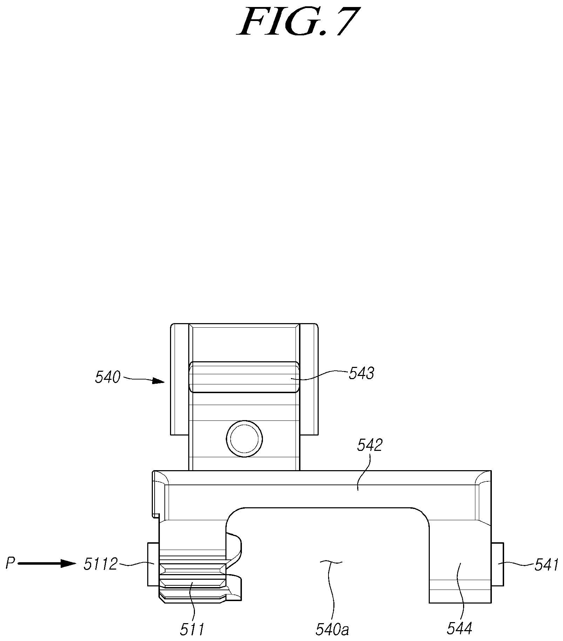

FIG. 7 is a side view illustrating an arm of a hinge module according to an embodiment.

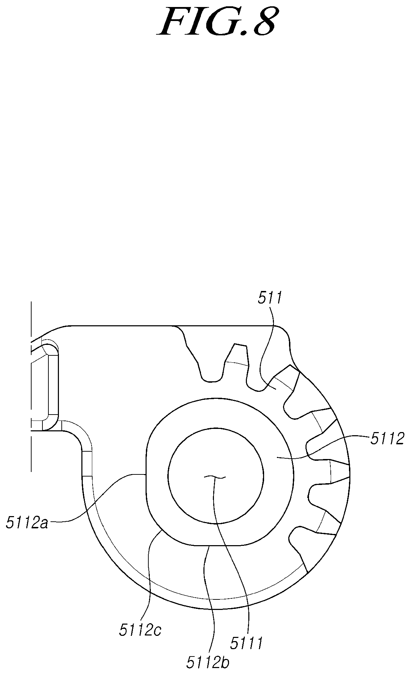

FIG. 8 is a view illustrating a gear of a hinge module according to an embodiment viewed in a direction P of FIG. 7.

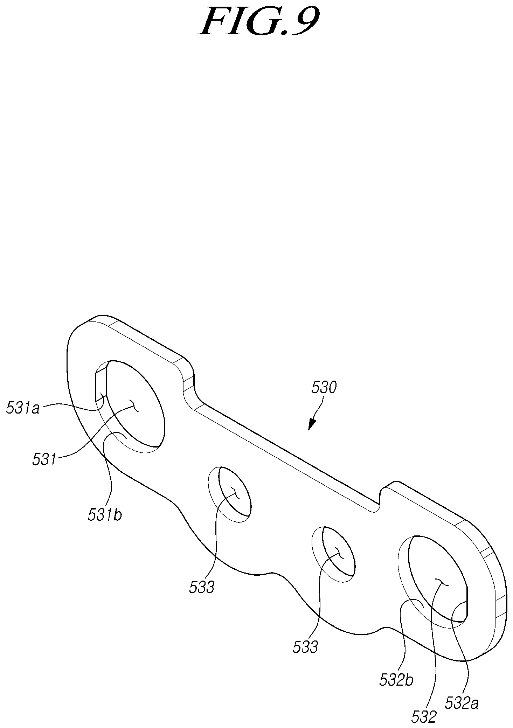

FIG. 9 is a perspective view illustrating a bracket of a hinge module according to an embodiment.

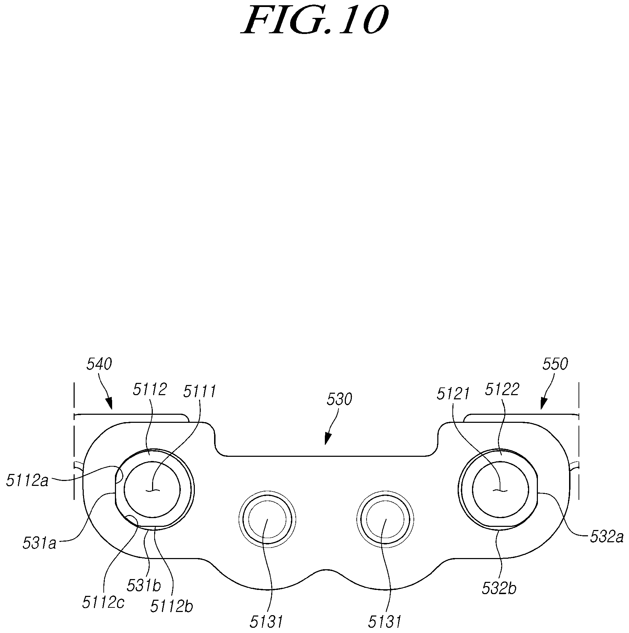

FIG. 10 is a view illustrating a state in which a first gear, a second gear, and an idle gear are coupled to a bracket according to an embodiment.

All features, components, and/or arrangement relationships between components illustrated in FIGS. 7 to 10 may be included separately or in combination with the features, components, and arrangement relationships between components described in other drawings of the disclosure. Likewise, all features, components, and/or arrangement relationships between components described in connection with FIGS. 1 to 6 and 11A to 21 may be included separately or in combination with the features, components, and arrangement relationships between components described in connection with FIGS. 5 and 6.

The same reference numerals are used to denote substantially the same components as the components of FIGS. 1 to 6 among the components of FIGS. 7 to 10.

Referring to FIGS. 7 to 10, an electronic device (e.g., the electronic device 101 of FIG. 1 or the electronic device 200 of FIG. 2A) according to an embodiment may include at least one of a first arm 540, a second arm 550, a gear bracket 530, a first gear 511, a second gear 512, and an idle gear 513.

Although FIG. 7 illustrates the first arm 540, the description of FIG. 7 may also be applied to the second arm 550 having a symmetrical structure with the first arm 540.

According to an embodiment, the first arm 540 may include a first body portion 542, a first wing portion 543, and a first cam support portion 544 (see FIG. 7). The first wing portion 543 may be formed to extend outward from the first body portion 542. The first wing portion 543 may be disposed to support the first housing (e.g., the first housing 210 of FIG. 2A). The first cam support portion 544 may extend to one side from the first body portion 542. The first cam support portion 544 may be positioned to support the cam portion (e.g., the support plate 523 of FIG. 6).

According to an embodiment, the shaft (e.g., the first shaft 514 of FIG. 6) may be disposed to pass through the first cam support portion 544 of the first arm 540.

According to an embodiment, the first arm 540 may include a first arm extension 541. The first arm extension 541 may extend from the first cam support portion 544. A central portion of the first arm extension 541 may be substantially the same as the rotational axis of the first gear 511. The first arm extension 541 may be formed to surround the outer circumferential side (e.g., surface) of the first shaft 514 penetrating the first cam support portion 544. The first arm extension 541 may extend in the axial direction of the first gear 511.

According to an embodiment, the first gear 511 may include a first hollow portion 5111 and a first shaft extension 5112 (see FIG. 8). The first gear 511 may be integrally formed with the first arm 540 as illustrated or may be formed as a partial configuration of the first arm 540. However, the disclosure is not limited thereto, and may be separately manufactured and coupled to the first arm 540.

According to an embodiment, the outer circumferential side (e.g., surface) of the first shaft extension 5112 of the first gear 511 may include a first recessed portion 5112a (or first deformed portion), a second recessed portion 5112b (or second deformed portion), and a first pressing portion 5112c (or first engaging portion, or first fillet). The first recessed portion 5112a and the second recessed portion 5112b may be spaced apart from each other with the first pressing portion 5112c interposed therebetween. The first pressing portion 5112c may be positioned between the first recessed portion 5112a and the second recessed portion 5112b. For example, the first recessed portion 5112a may be, include or have a flat surface or a curved surface. For example, the second recessed portion 5112b may be, include or have a flat surface or a curved surface. The first pressing portion 5112c protrudes radially outward compared to the first recessed portion 5112a and the second recessed portion 5112b and thus may also be referred to as a first protrusion.

According to an embodiment, the gear bracket 530 may include a first gear insertion hole 531, a second gear insertion hole 532, and a pair of idle gear insertion holes 533. The shaft of the idle gear 513 may be inserted into the pair of idle gear insertion holes 533.

According to an embodiment, the circumference of the first gear insertion hole 531 may include a first pressed portion 531a and a first curved portion 531b. The first curved portion 531b may be formed to extend from two opposite ends of the first pressed portion 531a. The first pressed portion 531a may be formed to protrude inward from the first gear insertion hole 531 as compared with the first curved portion 531b. If the first pressed portion 531a is formed as a curved side (e.g., surface), the curvature of the first pressed portion 531a may be smaller than that of the first curved portion 531b. If the first pressed portion 531a is formed as a flat side (e.g., surface), the first pressed portion 531a may be referred to as a first flat portion.

According to an embodiment, the circumference of the second gear insertion hole 532 may include a second pressed portion 532a and a second curved portion 532b. The second curved portion 532b may be formed to extend from two opposite ends of the second pressed portion 532a. The second pressed portion 532a may be formed to protrude inward from the second gear insertion hole 532 as compared with the second curved portion 532b. When the second pressed portion 532a is formed as a curved side (e.g., surface), the curvature of the second pressed portion 532a may be smaller than that of the second curved portion 532b. The second pressed portion 532a may be referred to as a second flat portion when formed as a flat surface.

According to an embodiment, the first pressed portion 531a and the second pressed portion 532a may be positioned to face opposite sides or opposite directions to each other. For example, the first pressed portion 531a may be positioned in a direction toward the first housing (e.g., the first housing 210 of FIG. 2A) of the circumference of the first gear insertion hole 531a. For example, the second pressed portion 532a may be positioned in a direction toward the second housing (e.g., the second housing 220 of FIG. 2A) of the circumference of the second gear insertion hole 532.

According to an embodiment, the first shaft extension 5112 of the first gear 511 may be disposed to be movable while being inserted into the first gear insertion hole 531. The first shaft extension 5112 may be disposed to be movable in the first gear insertion hole 531. The first gear insertion hole 531 may form or include an additional spare space so that the first shaft extension 5112 moves.

According to an embodiment, the second shaft extension 5122 of the second gear 512 may be disposed to be movable while being inserted into the second gear insertion hole 532. The second shaft extension 5122 may be disposed to be movable in the second gear insertion hole 532. The second gear insertion hole 532 may form or include an additional spare space so that the second shaft extension 5122 moves.

According to an embodiment, the first gear 511 may be moved in a direction substantially perpendicular to the axial direction of the first gear 511 according to the rotational position while the first shaft extension 5112 is rotated while being inserted into the first gear insertion hole 531 of the gear bracket 530. For example, when the first pressing portion 5112c of the first shaft extension 5112 presses the first pressed portion 531a of the first gear insertion hole 531, the first gear 511 may move toward the idle gear 513.

According to an embodiment, in a case that the first pressing portion 5112c is positioned on or moved onto the first pressed portion 531a by the rotation of the first gear 511, the first gear 511 may move toward the idle gear 513. A specific operation is described below.

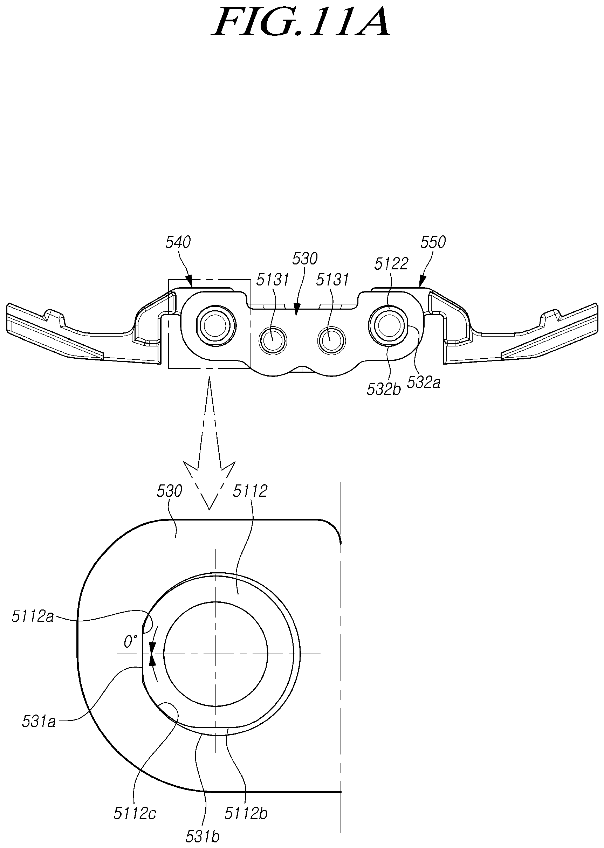

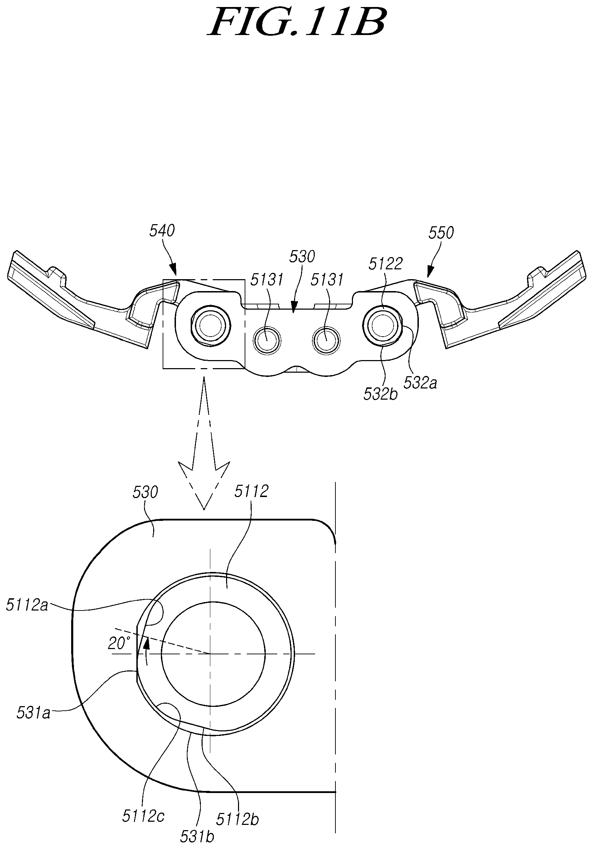

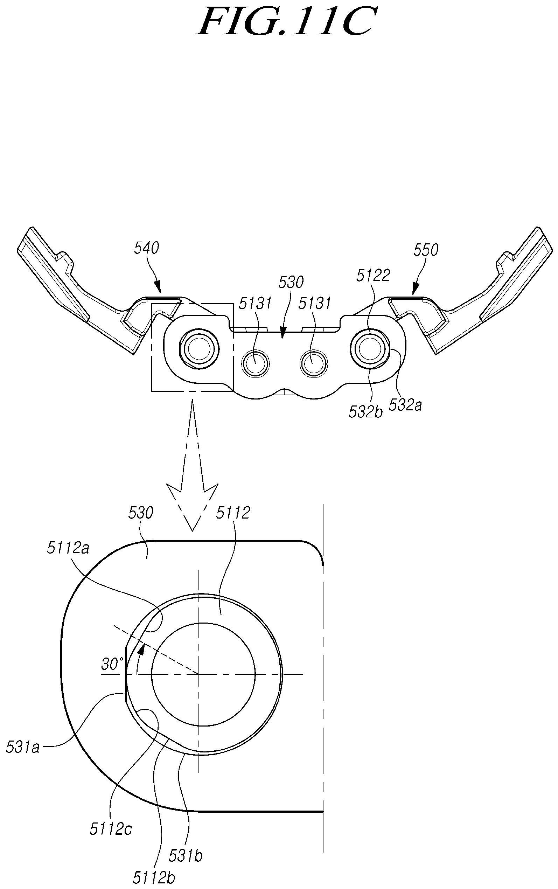

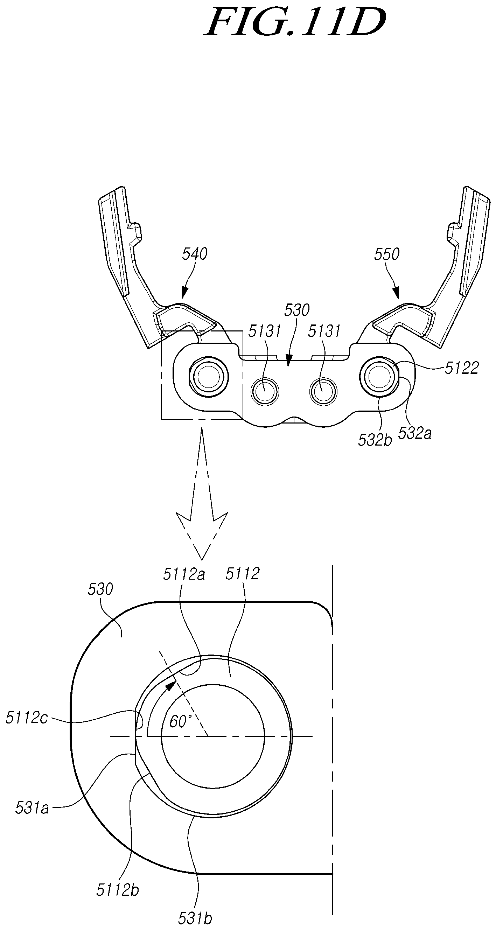

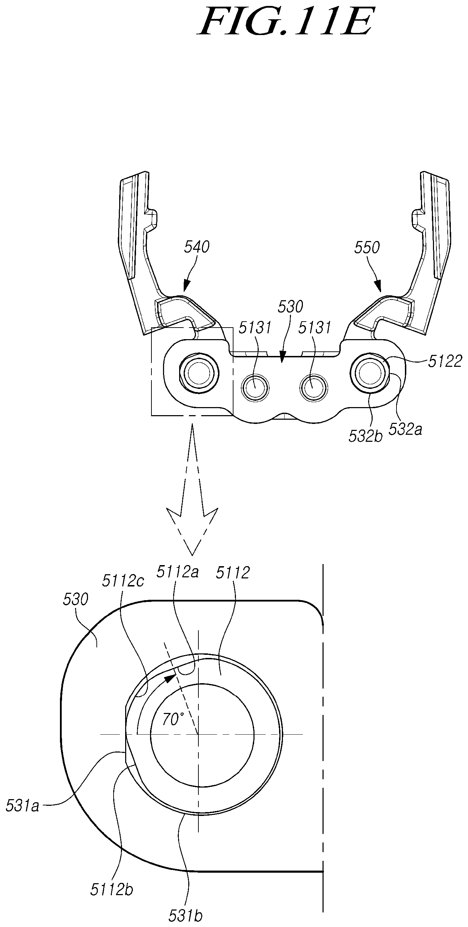

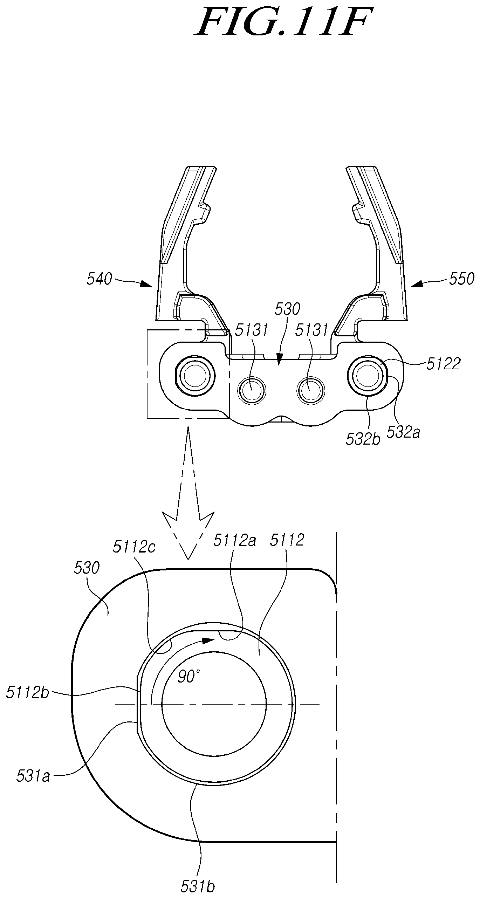

FIGS. 11A, 11B, 11C, 11D, 11E, and 11F are views illustrating an operation of a hinge module according to an embodiment.

All features, components, and/or arrangement relationships between components illustrated in FIGS. 11A, 11B, 11C, 11D, 11E, and 11F may be included separately or in combination with the features, components, and arrangement relationships between components described in other drawings of the disclosure. Likewise, all features, components, and/or arrangement relationships between components described in connection with FIGS. 1 to 10 and 12A to 21 may be included separately or in combination with the features, components, and arrangement relationships between components described in connection with FIGS. 11A, 11B, 11C, 11D, 11E, and 11F.

FIGS. 11A, 11B, 11C, 11D, 11E, and 11F are views illustrating an operating process of a hinge module 500 when an electronic device (e.g., the electronic device 101 of FIG. 1 or the electronic device 200 of FIG. 2) or a foldable housing (e.g., the foldable housing 210, 220 of FIG. 2A) operates between a first state (e.g., the unfolded state) and a second state (e.g., the folded state).

The first gear 511 and the second gear 512 may be symmetrically formed with respect to the central portion, and the first gear insertion hole 531 and the second gear insertion hole 532 may also be symmetrically formed with respect to the central portion. Hereinafter, the description focuses primarily on the first gear 511 and the first gear insertion hole 531 but may be equally applied to the second gear 512 and the second gear insertion hole 532.

When the electronic device 200 (or the foldable housing 210, 220) rotates from the first state to the second state, the hinge module 500 may sequentially operate from FIG. 11A to FIG. 11F. When the electronic device 200 rotates from the second state to the first state, the hinge module 500 may sequentially operate from FIG. 11F to FIG. 11A. The foldable housing 210, 220 may be rotated in the folded state, an intermediate state, and an unfolded state according to the operation of the hinge module 500.

FIG. 11A illustrates an arrangement structure of a hinge module 500 when an electronic device 200 is in a first state. FIGS. 11B, 11C, 11D, and 11E illustrate an arrangement structure of a hinge module 500 when an electronic device 200 is in an intermediate state (e.g., between a first state and a second state). FIG. 11F illustrates an arrangement structure of a hinge module 500 when an electronic device 200 is in a second state.

FIG. 11B illustrates a state in which a first gear 511 and/or a second gear 512 is rotated by 20 degrees with respect to FIG. 11A. FIG. 11C illustrates a state in which a first gear 511 and/or a second gear 512 is rotated by 30 degrees with respect to FIG. 11A. FIG. 11D illustrates a state in which a first gear 511 and/or a second gear 512 is rotated by 60 degrees with respect to FIG. 11A. FIG. 11E illustrates a state in which a first gear 511 and/or a second gear 512 is rotated by 70 degrees with respect to FIG. 11A. FIG. 11F illustrates a state in which a first gear 511 and/or a second gear 512 is rotated by 90 degrees with respect to FIG. 11A.

According to an embodiment, the first shaft extension 5112 may move in the first gear insertion hole 531 according to the rotational position of the first gear 511. The first shaft extension 5112 may move toward the idle gear 513, or away from the idle gear 513 in a direction perpendicular to the axial direction of the first gear 511 in the first gear insertion hole 531.

According to an embodiment, when the electronic device 200 (or the foldable housing 210, 220) is in the intermediate state, the first shaft extension 5112 presses the circumference of the first gear insertion hole 531, so that the first gear 511 may be moved toward the idle gear 513.

According to an embodiment, when the electronic device 200 (or the foldable housing 210, 220) is in the folded state or the unfolded state, a gap may be formed between the first gear 511 and the idle gear 513. In the folded state of the electronic device 200 (or the foldable housing 210, 220), the first recessed portion 5112a of the first shaft extension 5112 may be positioned on (or adjacent to) the first pressed portion 531a of the first gear insertion hole 531. In the unfolded state of the electronic device 200 (or the foldable housing 210, 220), the second recessed portion 5112b of the first shaft extension 5112 may be positioned on (or adjacent to) the first pressed portion 531a of the first gear insertion hole 531.

Referring to FIG. 11A, when the electronic device 200 (or the foldable housing 210, 220) is in the unfolded state, the first recessed portion 5112a of the first shaft extension 5112 may be positioned on the first pressed portion 531a of the first gear insertion hole 531. In this case, a gap may be formed between the first gear 511 and the idle gear 513.

Referring to FIGS. 11B to 11E, when the electronic device 200 (or the foldable housing 210 or 220) is in the intermediate state between the unfolded state and the folded state, the first pressing portion 5112c of the first shaft extension 5112 may be positioned on (e.g. contacting) the first pressed portion 531a of the first gear insertion hole 531. In this case, as the first pressing portion 5112c presses the first pressed portion 531a, the first shaft extension 5112 may be moved in a direction opposite to the first pressed portion 531a. The first gear 511 and the first shaft extension 5112 may also move in a direction opposite to the first pressed target 531a.

When the electronic device 200 (or the foldable housing 210, 220) is in the intermediate state, the first gear 511 is moved toward the idle gear 513, so that the gap between the first gear 511 and the idle gear 513 may be decreased or removed. By the structure of the first gear 511 and the first gear insertion hole 531 that reduces the distance between the first gear 511 and the idle gear 513 in the intermediate state, it is possible to enhance user experience by mitigating the clearance generated when the user folds or unfolds the electronic device 200 (or the foldable housing 210, 220). According to an embodiment, by reducing or removing the gap between the first gear 511 and the idle gear 513 in the intermediate state to mitigate the clearance, it is possible to mitigate the shaking of the electronic device 200 due to the gap between the first gear 511 and the idle gear 513 when the user uses the electronic device 200 while maintaining the intermediate state.

Referring to FIG. 11F, when the electronic device 200 (or the foldable housing 210, 220) is in the folded state, the second recessed portion 5112b of the first shaft extension 5112 may be positioned on (e.g. contacting) the first pressed portion 531a of the first gear insertion hole 531. In this case, a gap may be formed (or may be present) between the first gear 511 and the idle gear 513.

When the electronic device 200 (or the foldable housing 210, 220) is in the unfolded state or the folded state, the first recessed portion 5112a or the second recessed portion 5112b may be positioned on the first pressed portion 531a to form a gap between the first gear 511 and the idle gear 513. In the unfolded state or the folded state, a gap between the first gear 511 and the idle gear 513 may be formed (or may be present) to reduce the load generated between gears.

According to an embodiment, the first gear 511 may be positioned closer to the idle gear 513 when the first recessed portion 5112a and the second recessed portion 5112b do not contact the first pressed portion 531a than when the first recessed portion 5112a or the second recessed portion 5112b contact the first pressed portion 531a.

According to an embodiment, when the electronic device 200 (or the foldable housing 210, 220) rotates between the unfolded state, the folded state, and the intermediate state, the first shaft extension 5112 may be moved relative to the gear bracket 530. When the electronic device 200 is rotated around the hinge, the first shaft extension 5112 may be moved in the first gear insertion hole 531.

According to an embodiment, when the electronic device 200 (or the foldable housing 210, 220) rotates from the unfolded state (e.g., the state of FIG. 11A) to the intermediate state (e.g., the state of one of FIGS. 11B to 11E), the rotational axis of the first shaft extension 5112 may move in a direction away from the first pressed portion 531a of the first gear insertion hole 531.

According to an embodiment, when the electronic device 200 (or the foldable housing 210, 220) rotates from the intermediate state to the folded state (e.g., the state of FIG. 11F), the rotational axis of the first shaft extension 5112 may move in a direction toward the first pressed target 531a of the first gear insertion hole 531.

According to an embodiment, the position of the first shaft extension 5112 relative to the first gear insertion hole 531 in the unfolded state may be substantially the same as the position of the first shaft extension 5112 relative to the second gear insertion hole 532 in the folded state.

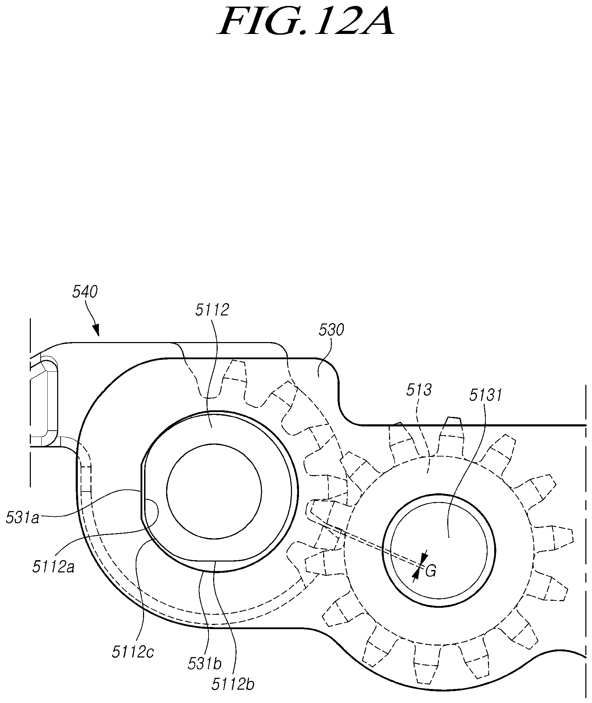

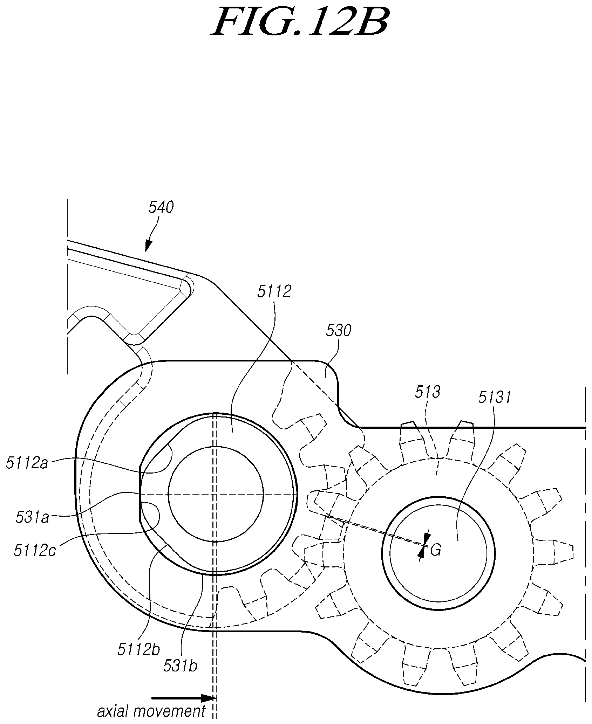

FIGS. 12A and 12B are views illustrating an example movement of a first gear during the operation of a hinge module according to an embodiment.

All features, components, and/or arrangement relationships between components illustrated in FIGS. 12A and 12B may be included separately or in combination with the features, components, and arrangement relationships between components described in other drawings of the disclosure. Likewise, all features, components, and/or arrangement relationships between components described in connection with FIGS. 1 to 11F and 13A to 21 may be included separately or in combination with the features, components, and arrangement relationships between components described in connection with FIGS. 12A and 12B.

FIG. 12A is a view illustrating a distance between a first gear 511 and an idle gear 513 when an electronic device (e.g., the electronic device 200 of FIG. 2A) is in an unfolded state. FIG. 12B is a view illustrating a distance between a first gear 511 and an idler gear 513 when an electronic device 200 is in an intermediate state. FIG. 12A may correspond to FIG. 11A. FIG. 12B may correspond to one of FIGS. 11B to 11E.

Referring to FIG. 12A, when the first recessed portion 5112a of the first shaft extension 5112 is positioned on the first pressed portion 531a of the first gear insertion hole 531, a gap G between the first gear 511 and the idle gear 513 may be formed or present.

Referring to FIG. 12B, when the first pressing portion 5112c of the first shaft extension 5112 is positioned on the first pressed portion 531a of the first gear insertion hole 531, the gap G between the first gear 511 and the idle gear 513 may be decreased. The disclosure may prevent the clearance in the intermediate state by reducing the gap between the first gear 511 and the idle gear 513 as illustrated in the intermediate state of the electronic device 200.

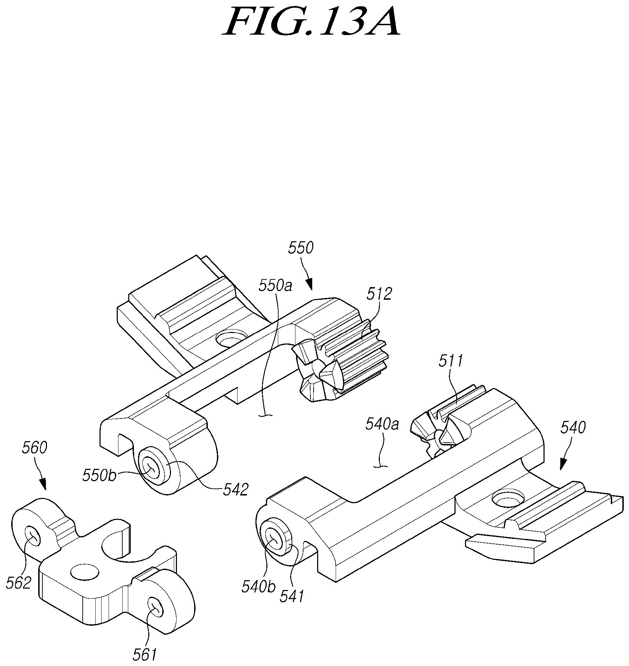

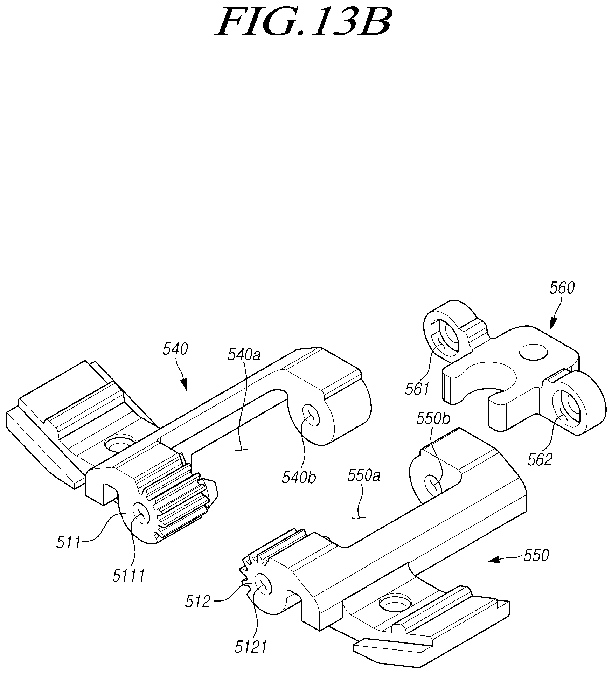

FIGS. 13A and 13B are exploded views illustrating a first arm, a second arm, and a support bracket of a hinge module according to an embodiment.

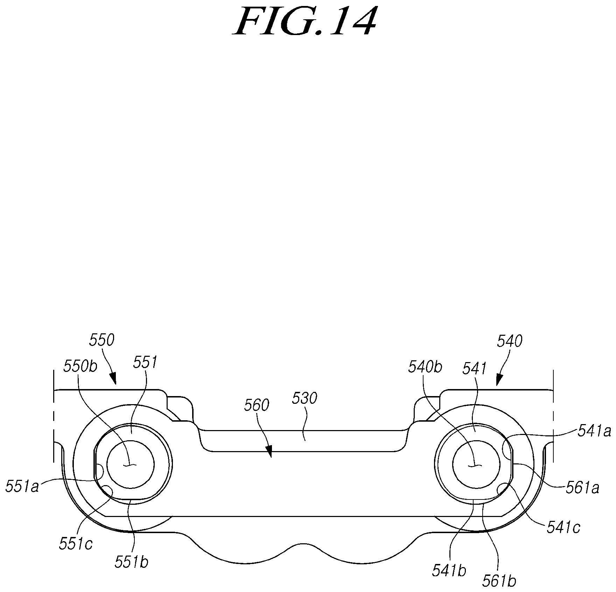

FIG. 14 is a view illustrating a state in which a first arm and a second arm are coupled to a support bracket of a hinge module according to an embodiment.

FIG. 13A is a front perspective view illustrating a first arm 540, a second arm 550, and a support bracket 560, and FIG. 13B is a rear perspective view illustrating a first arm 540, a second arm 550, and a support bracket 560.

All features, components, and/or arrangement relationships between components illustrated in FIGS. 13A, 13B, and 14 may be included separately or in combination with the features, components, and arrangement relationships between components described in other drawings of the disclosure. Likewise, all features, components, and/or arrangement relationships between components described in connection with FIGS. 1 to 12B and 15 to 21 may be included separately or in combination with the features, components, and arrangement relationships between components described in connection with FIGS. 13A, 13B, and 14.

Referring to FIGS. 13A and 13B, an electronic device (e.g., the electronic device 101 of FIG. 1 or the electronic device 200 of FIG. 2A) according to an embodiment may include a first arm 540, a second arm 550, and a support bracket 560. The first arm 540 may include a first arm extension 541. The second arm 550 may include a second arm extension 551. The first arm extension 541 and the second arm extension 551 may be symmetrically formed with respect to the central portion.

According to an embodiment, the outer circumferential side (e.g., surface) of the first arm extension 541 may include a first arm recessed portion 541a (of first deformed portion), a second arm recessed portion 541b (or second deformed portion), and a first arm pressing portion 541c (or first engaging portion or first fillet). The first arm recessed portion 541a and the second arm recessed portion 541b may be spaced apart from each other with the first arm pressing portion 541c interposed therebetween. The first arm pressing portion 541c may be positioned between the first arm recessed portion 541a and the second arm recessed portion 541b. For example, the first arm recessed portion 541a may be, include or have a flat side (e.g., surface) or a curved side (e.g., surface). For example, the second arm recessed portion 541b may be, include or have a flat surface or a curved surface. The first arm pressing portion 541c protrudes radially outward compared to the first arm recessed portion 541a and the second arm recessed portion 541b and thus may also be referred to as a first protrusion. The first arm recessed portion 541a may correspond to a first recessed portion (e.g., the first recessed portion 5112a of FIG. 8) of the first gear 511. The second arm recessed portion 541b may correspond to a second recessed portion (e.g., the second recessed portion 5112b of FIG. 8) of the first gear 511. The first arm pressing portion 541c may correspond to the first pressing portion (e.g., the first pressing portion 5112c of FIG. 8) of the first gear 511.

According to an embodiment, the circumferential surface of the first arm extension 541 and the circumferential surface of the first shaft extension (e.g., the first shaft extension 5112 of FIG. 8) may have substantially the same shape. The circumferential surface of the first arm extension 541 may be aligned in substantially the same shape as the circumferential surface of the first shaft extension 5112 of the first gear 511 when viewed in the axial direction of the first gear 511.

According to the embodiment, the circumferential surface of the second arm extension 551 and the circumferential surface of the second shaft extension (e.g., the second shaft extension 5122 of FIG. 6) may have substantially the same shape. The circumferential surface of the second arm extension 551 may be aligned in substantially the same shape as the circumferential surface of the second shaft extension 5122 of the second gear 512 when viewed in the axial direction of the second gear 512.

According to an embodiment, the support bracket 560 may be coupled to the first arm 540 and the second arm 550. The support bracket 560 may include a first arm insertion hole 561 (or first hole) and a second arm insertion hole 562 (or second hole). The first arm insertion hole 561 may be formed to allow the first arm extension 541 of the first arm 540 to be inserted thereto or therein. The second arm insertion hole 562 may be formed to allow the second arm extension 551 of the second arm 550 to be inserted thereto or therein. The first shaft (e.g., the first shaft 514 of FIG. 6) may pass through the first arm insertion hole 561. The second shaft (e.g., the second shaft 515 of FIG. 6) may pass through the second arm insertion hole 562.

According to an embodiment, the circumference of the first arm insertion hole 561 may include a first arm pressed portion 561a and a first arm curved portion 561b. The first arm curved portion 561b may be formed to extend from two opposite ends of the first arm pressed portion 561a. The first arm pressed portion 561a may be formed to protrude to the inside of the first arm insertion hole 561 as compared with the first arm curved portion 561b. When the first arm pressed portion 561a is formed as a curved surface, the curvature of the first arm pressed portion 561a may be smaller than that of the first arm curved portion 561b. When the first arm pressed portion 561a is formed as a flat surface, the first arm pressed portion 561a may be referred to as a first flat portion.

According to an embodiment, the first arm insertion hole 561 may have substantially the same shape as the first gear insertion hole (e.g., the first gear insertion hole 531 of FIG. 9) of the gear bracket (e.g., the gear bracket 530 of FIG. 9). The first arm insertion hole 561 may be formed to be aligned in the same shape as the first gear insertion hole 531 when viewed in the axial direction of the first gear 511.

According to an embodiment, the second arm insertion hole 562 may have substantially the same shape as the second gear insertion hole (e.g., the second gear insertion hole 532 of FIG. 9) of the gear bracket 530. The second arm insertion hole 562 may be formed to be aligned in the same shape as the second gear insertion hole 532 when viewed in the axial direction of the second gear 512.

According to an embodiment, the first arm extension 541 of the first arm 540 may be disposed to be movable while being inserted into the first arm insertion hole 561. The first arm extension 541 may be disposed to be movable in the first arm insertion hole 561. The first arm insertion hole 561 may form or include an additional spare space so that the first arm extension 541 moves.

According to an embodiment, the second arm extension 551 of the second arm 550 may be disposed to be movable while being inserted into the second arm insertion hole 562. The second arm extension 551 may be disposed to be movable in the second arm insertion hole 562. The second arm insertion hole 562 may form or include an additional spare space so that the second arm extension 551 moves.

According to an embodiment, the first arm 540 may rotate together as the first gear 511 rotates. The first arm extension 541 may rotate together as the first gear 511 rotates. During the rotation of the first arm extension 541, while the first arm extension 541 is inserted into the first arm insertion hole 561 of the support bracket 560, the first arm extension 541 may move in a direction substantially perpendicular to the axial direction of the first gear 511 according to the rotational position. For example, when the first arm pressing portion 541c of the first arm extension 541 presses the first arm pressed portion 561a of the first arm insertion hole 561, the first arm extension 541 may move toward the idle gear 513. As the first arm extension 541 moves toward the idle gear 513, the first shaft 514 penetrating the first arm extension 541 may also move toward the idle gear 513.

According to an embodiment, when the first arm pressing portion 541c is positioned on the first arm pressed portion 561a by the rotation of the first arm extension 541, the first arm extension 541 may move in a direction perpendicular to the axial direction of the first gear 511 and toward the idle gear 513. For example, when the first arm pressing portion 541c is positioned on the first arm pressed portion 561a by the rotation of the first arm extension 541, the rotational axis of the first arm extension 541 may move in the direction toward the axis of the idle gear 513. This movement operation may help to reduce the gap between the first gear 511 and the idle gear 513 in the intermediate state of the electronic device 200. The specific operation may be performed in substantially the same manner as that of FIGS. 11A to 11F.

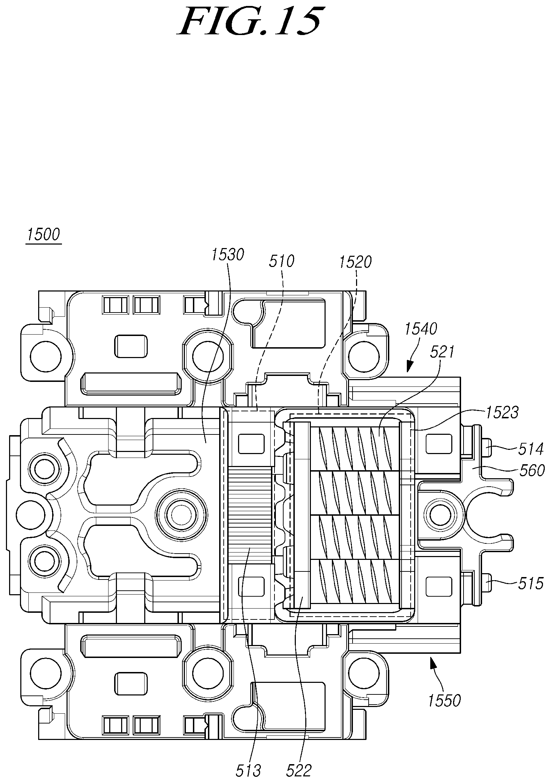

FIG. 15 is a plan view illustrating a hinge module of an electronic device according to an embodiment.

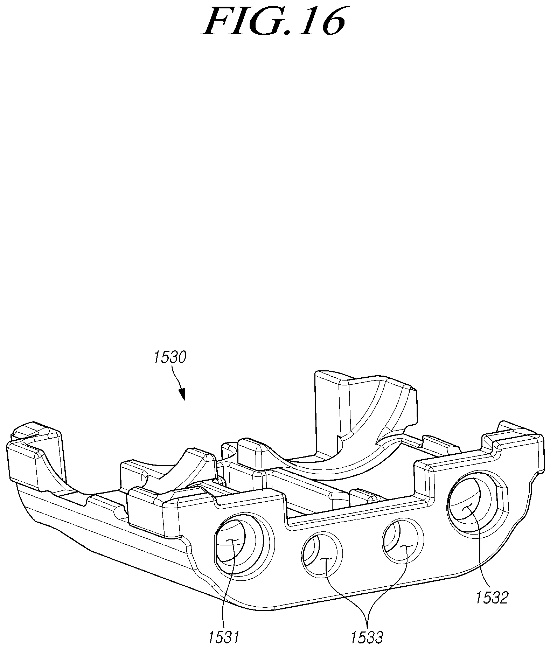

FIG. 16 is a perspective view illustrating the rotate bracket of FIG. 15 according to an embodiment.

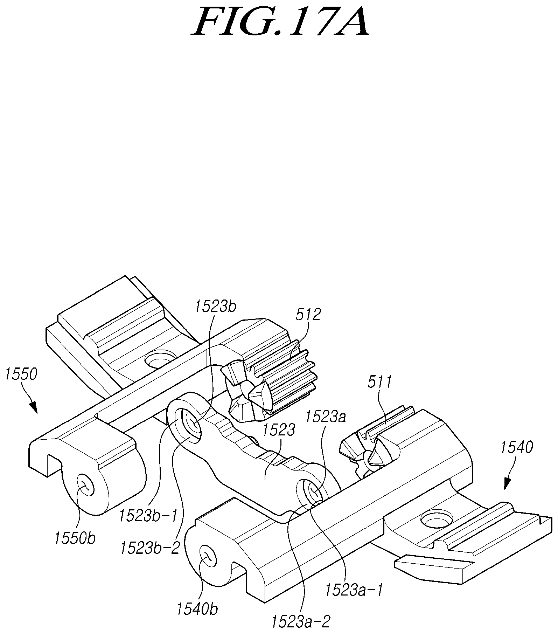

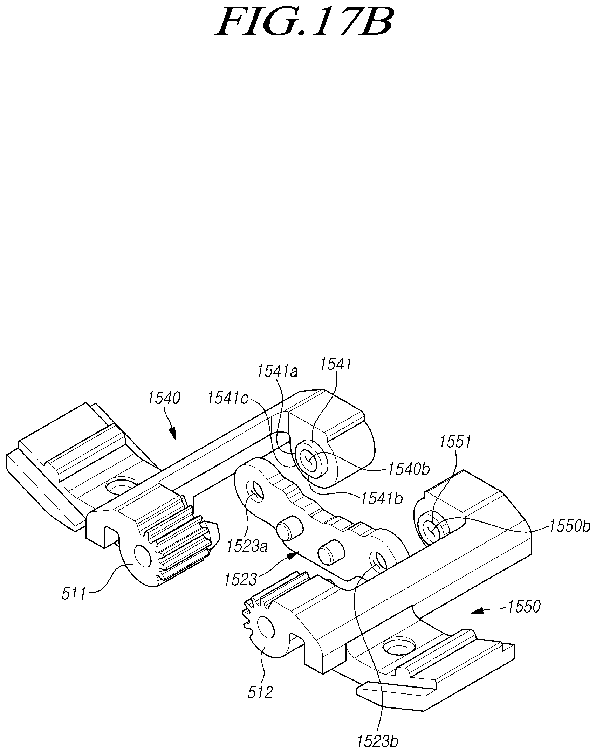

FIGS. 17A and 17B are views illustrating a first arm, a second arm, and a cam portion in a hinge module according to an embodiment.

All features, components, and/or arrangement relationships between components illustrated in FIGS. 15, 16, 17A, and 17B may be included separately or in combination with the features, components, and arrangement relationships between components described in other drawings of the disclosure. Likewise, all features, components, and/or arrangement relationships between components described in connection with FIGS. 1 to 14 and 8 to 21 may be included separately or in combination with the features, components, and arrangement relationships between components described in connection with FIGS. 15, 16, 17A, and 17B.

FIGS. 15, 16, 17A, and 17B are exemplary views for describing that a structure for mitigating (e.g. reducing) the clearance between a first gear and an idle gear that may occur in the intermediate state may be applied to a hinge module according to various embodiments, and the structure, shape, and arrangement of the illustrated hinge module do not limit the scope of the disclosure.

Referring to FIGS. 15, 16, 17A, and 17B, an electronic device (e.g., the electronic device 101 of FIG. 1 or the electronic device 200 of FIG. 2A) according to an embodiment may include a hinge module 1500. The same reference numerals are used for the components of the hinge module 1500 that are substantially the same as the components of the hinge module (e.g., the hinge module 500 of FIG. 5) illustrated in FIGS. 5 to 14.

According to an embodiment, the hinge module 1500 may include at least one of a gear structure 510, a support structure 1520, a rotate bracket 1530, a first arm 1540, a second arm 1550, and a support bracket 560. The hinge module 1500 may support the electronic device 200 to be folded or unfolded not only in the first state (e.g., the unfolded state) or the second state (e.g., the folded state) of the electronic device 200 but also in the intermediate state (e.g., between the first state and the second state).

According to an embodiment, the gear structure 510 may include a first gear (e.g., the first gear 511 of FIG. 6) and a second gear (e.g., the second gear 512 of FIG. 6). The first gear 511 may include a first shaft extension (e.g., the first shaft extension 5112 of FIG. 6). The second gear 512 may include a second shaft extension (e.g., the second shaft extension 5122 of FIG. 6).

According to an embodiment, the rotate bracket 1530 may include a first gear insertion hole 1531 (e.g. a first hole or first gear guide), a second gear insertion hole 1532 (e.g. a second hole or second gear guide), and a plurality of idle gear insertion holes 1533(e.g. third holes or idle gear guides). The rotate bracket 1530 may be disposed to be spaced apart from the support bracket 560. The rotate bracket 1530 and the support bracket 560 may be spaced apart from each other with the support structure 1520 and the gear structure 510 interposed therebetween.

According to an embodiment, the first gear insertion hole 1531 may be formed to allow the first shaft extension 5112 of the first gear 511 to be inserted thereto. The first gear insertion hole 1531 may be formed to allow a first shaft (e.g., the first shaft 514 of FIG. 6) to pass therethrough. The first gear insertion hole 1531 may be formed to allow the first shaft 514 and the first shaft extension 5112 surrounding the first shaft 514 to be inserted thereto.

According to an embodiment, the second gear insertion hole 1532 may be formed to allow the second shaft extension 5122 of the second gear 512 to be inserted thereto. The second gear insertion hole 1532 may be formed to allow the second shaft (e.g., the second shaft 515 of FIG. 6) to pass therethrough. The second gear insertion hole 1532 may be formed to allow the second shaft 515 and the second shaft extension 5122 surrounding the second shaft 515 to be inserted thereto.

According to an embodiment, the plurality of idle gear insertion holes 1533 may be disposed between the first gear insertion hole 1531 and the second gear insertion hole 1532. The plurality of idle gear insertion holes 1533 may be formed to allow the shaft extension of the idle gear 513 to be inserted thereto.

According to an embodiment, the operation in which the first shaft extension 5112 moves in the first gear insertion hole 1531 of the rotate bracket 1530 when the first gear 511 rotates may be substantially the same as the operation described with reference to FIGS. 11A to 11F.

According to an embodiment, the first arm 1540 may include a first arm extension 1541. The first arm extension 1541 may extend along the axial direction of the first gear 511 or the length direction of the first shaft 514. The first arm extension 1541 may protrude (e.g., extend) in a direction toward the first gear 511. The first arm extension 1541 may extend in a direction toward the support plate 1523. The first arm extension 1541 may protrude in the axial direction of the first gear 511 or the length direction of the first shaft 514 along the periphery of the first arm hole 1540b. The first arm extension 1541 may extend from an edge defining the first arm hole 1540b along the axial direction of the first gear 511 or the length direction of the first shaft 514. The first arm extension 1541 may be formed to surround the circumference of the first shaft 514. The first arm extension 1541 may have a substantially ring-shaped cross section.

According to an embodiment, the outer circumferential side (e.g., surface) of the first arm extension 1541 may include a first arm recessed portion 1541a (or first deformed portion), a second arm recessed portion 1541b (or second deformed portion), and a first arm pressing portion 1541c (or first engaging portion, or first fillet). The first arm recessed portion 1541a and the second arm recessed portion 1541b may be spaced apart from each other with the first arm pressing portion 1541c interposed therebetween. The first arm pressing portion 1541c may be positioned between the first arm recessed portion 1541a and the second arm recessed portion 1541b. For example, the first arm recessed portion 1541a may be, include or have a flat surface or a curved side (e.g., surface. For example, the second arm recess 1541b may be, include or have a flat surface or a curved surface. The first arm pressing portion 1541c protrudes radially outward compared to the first arm recessed portion 1541a and the second arm recessed portion 1541b and thus may also be referred to as a first protrusion. The first arm recessed portion 1541a may correspond to a first recessed portion (e.g., the first recessed portion 5112a of FIG. 8) of the first gear 511. The second arm recessed portion 1541b may correspond to the second recessed portion (e.g., the second recessed portion 5112b of FIG. 8) of the first gear 511. The first arm pressing portion 1541c may correspond to the first pressing portion (e.g., the first pressing portion 5112c of FIG. 8) of the first gear 511.

According to an embodiment, the circumferential surface of the first arm extension 1541 and the circumferential surface of the first shaft extension 5112 may have substantially the same shape. The circumferential surface of the first arm extension 1541 may be aligned in substantially the same shape as the circumferential surface of the first shaft extension 5112 of the first gear 511 when viewed in the axial direction of the first gear 511.

According to an embodiment, the second arm 1550 may include a second arm extension 1551. The second arm extension 1551 may extend along the axial direction of the second gear 512 or the length direction of the second shaft 515. The second arm extension 1551 may protrude (e.g., extend) in a direction toward the second gear 512. The second arm extension 1551 may extend in a direction toward the cam portion 522, 1523. The second arm extension 1551 may protrude in the axial direction of the second gear 512 or the length direction of the second shaft 515 along the periphery of the second arm hole 1550b. The second arm extension 1551 may extend from an edge defining the second arm hole 1550b along the axial direction of the second gear 512 or the length direction of the second shaft 515. The second arm extension 1551 may be formed to surround the circumference of the second shaft 515. The second arm extension 1551 may have a substantially ring-shaped cross section.

According to an embodiment, the circumferential surface of the second arm extension 1551 and the circumferential surface of the second shaft extension 5122 may have substantially the same shape. The circumferential surface of the second arm extension 1551 may be aligned in substantially the same shape as the circumferential surface of the second shaft extension 5122 of the second gear 512 when viewed in the axial direction of the second gear 512.

According to an embodiment, the support structure 1520 may include a plurality of elastic member(s) 521 and a cam portion(s) 522, 1523. The cam portion(s) 522, 1523 may include a first cam 522 and a support plate 1523.

According to an embodiment, the support plate 1523 may be disposed adjacent to at least one of the first arm hole 1540b of the first arm 1540, the second arm hole 1550b of the second arm 1550, and the support bracket 560. The support plate 1523 may include a plurality of holes through which the first shaft 514 and the second shaft 515 pass.

According to an embodiment, the support plate 1523 may include a first arm insertion hole 1523a and a second arm insertion hole 1523b. The first arm insertion hole 1523a may be formed to allow the first arm extension 1541 to be inserted thereto. The second arm insertion hole 1523b may be formed to allow the second arm extension 1551 to be inserted thereto. The first shaft 514 may be disposed to pass through the first arm insertion hole 1523a. The second shaft 515 may be disposed to pass through the second arm insertion hole 1523b.

According to an embodiment, the first arm insertion hole 1523a may be formed to allow the first arm extension 1541 of the first arm 1540 to be inserted thereto or therein. The second arm insertion hole 1523b may be formed to allow the second arm extension 1551 of the second arm 1550 to be inserted thereto or therein. The first shaft 514 may pass through the first arm insertion hole 1523a. The second shaft 515 may pass through the second arm insertion hole 1523b.

According to an embodiment, the circumference of the first arm insertion hole 1523a may include a first arm pressed portion 1523a-1 and a first arm curved portion 1523a-2. The first arm curved portion 1523a-2 may be formed to extend from two opposite ends of the first arm pressed portion 1523a-1. The first arm pressed portion 1523a-1 may be formed to protrude (e.g., extend) inwardly from the first arm insertion hole 1523a as compared with the first arm curved portion 1523a-2. When the first arm pressed portion 1523a-1 is formed as a curved surface, the curvature of the first arm pressed portion 1523a-1 may be smaller than that of the first arm curved portion 1523a-2. When the first arm pressed portion 1523a-1 is formed as a flat surface, the first arm pressed portion 1523a-1 may be referred to as a first flat portion.

According to an embodiment, the first arm insertion hole 1523a may have substantially the same shape as the first gear insertion hole 1531 of the rotate bracket 1530. The first arm insertion hole 1523a may be formed to be aligned in the same shape as the first gear insertion hole 1531 when viewed in the axial direction of the first gear 511.

According to an embodiment, the second arm insertion hole 1523b may have substantially the same shape as the second gear insertion hole 1532 of the rotate bracket 1530. The second arm insertion hole 1523b may be formed to be aligned in the same shape as the second gear insertion hole 1532 when viewed in the axial direction of the second gear 512.

According to an embodiment, the first arm extension 1541 of the first arm 1540 may be disposed to be movable while being inserted into the first arm insertion hole 1523a. The first arm extension 1541 may be disposed to be movable in the first arm insertion hole 1523a. The first arm insertion hole 1523a may form or include an additional spare space so that the first arm extension 1541 moves.

According to an embodiment, the second arm extension 1551 of the second arm 1550 may be disposed to be movable while being inserted into the second arm insertion hole 1523b. The second arm extension 1551 may be disposed to be movable in the second arm insertion hole 1523b. The second arm insertion hole 1523b may form or include an additional spare space so that the second arm extension 1551 moves.

According to an embodiment, the first arm 1540 may rotate together as the first gear 511 rotates. The first arm extension 1541 may rotate together as the first gear 511 rotates. While the first arm extension 1541 is rotated while the first arm extension 1541 is inserted into the first arm insertion hole 1523a of the support plate 1523, the first arm extension 1541 may be moved in a direction substantially perpendicular to the axial direction of the first gear 511 according to the rotational position. For example, when the first arm pressing portion 1541c of the first arm extension 1541 presses the first arm pressed portion 1523a-1 of the first arm insertion hole 1523a, the first arm extension 1541 may move toward the idle gear 513. As the first arm extension 1541 moves toward the idle gear 513, the first shaft 514 penetrating the first arm extension 1541 may also move toward the idle gear 513.

According to an embodiment, when the first arm pressing portion 1541c is positioned on the first arm pressed portion 1523a-1 by the rotation of the first arm extension 1541, the first arm extension 1541 may move in a direction perpendicular to the axial direction of the first gear 511 and toward the idle gear 513. This movement operation may help to reduce the gap between the first gear 511 and the idle gear 513 in the intermediate state of the electronic device 200. The specific operation may be performed in substantially the same manner as that of FIGS. 11A to 11F.

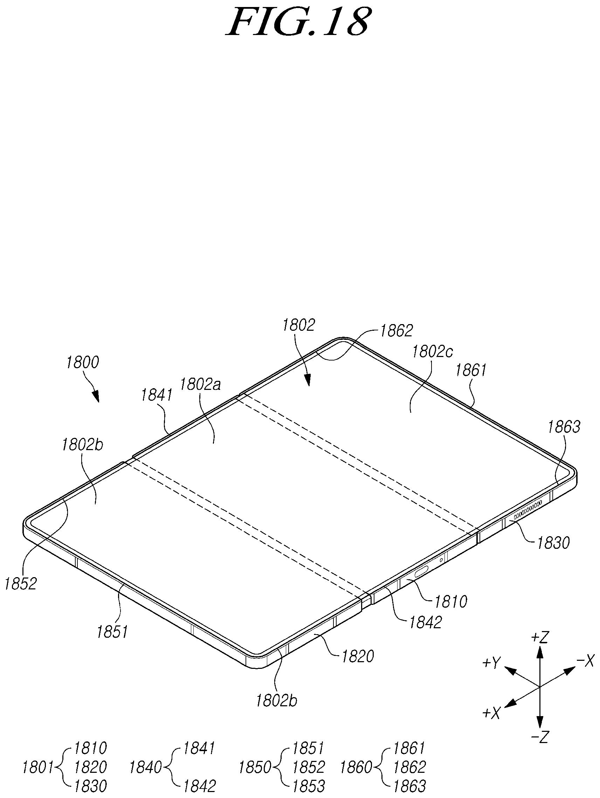

FIG. 18 is a front perspective view illustrating a multi-foldable electronic device in a first state according to an embodiment.

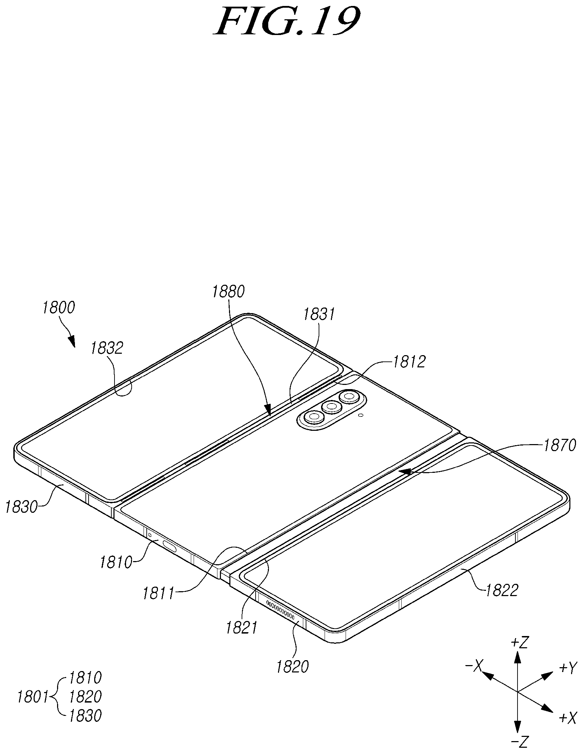

FIG. 19 is a rear perspective view illustrating a multi-foldable electronic device in a first state according to an embodiment.

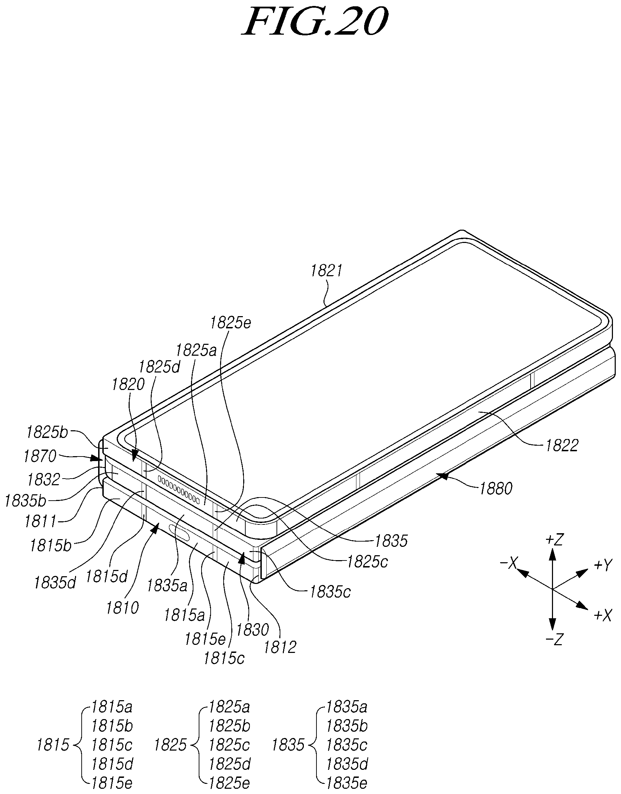

FIG. 20 is a perspective view illustrating a multi-foldable electronic device in a second state according to an embodiment.

All features, components, and/or arrangement relationships between components illustrated in FIGS. 18 to 20 may be included separately or in combination with the features, components, and arrangement relationships between components described in other drawings of the disclosure. Likewise, all features, components, and/or arrangement relationships between components described in connection with FIGS. 1 to 17B and 21 may be included separately or in combination with the features, components, and arrangement relationships between components described in connection with FIGS. 18 to 20.

Referring to FIGS. 18 to 20, an electronic device 1800 (e.g., the electronic device 101 of FIG. 1) may include a housing 1801. The electronic device 1800 may include a display 1802. The housing 1801 may form a space where the display 1802 is disposed. The display 1802 may be a flexible display 1802 (or foldable display). At least a portion of the display 1802 may be folded or unfolded, e.g. is foldable.

According to an embodiment, the housing 1801 may include a first housing 1810 (or first housing portion). The housing 1801 may include a second housing 1820 (or second housing portion). The housing 1801 may include a third housing 1830 or third housing portion). The first housing 1810 may be disposed between the second housing 1820 and the third housing 1830. The second housing 1820 may be rotatably coupled to the first housing 1810. The third housing 1830 may be rotatably coupled to the first housing 1810. The display 1802 may include a first display area 1802a (or first display region) corresponding to the first housing 1810, a second display area 1802b (or second display region) corresponding to the second housing 1820, and a third display area 1802c (or third display region) corresponding to the third housing 1830.

According to an embodiment, the electronic device 1800 may include supports 1840, 1850, and 1860. The supports 1840, 1850, and 1860 may be disposed between the housing 1801 and the display 1802. The supports 1840, 1850, and 1860 may be coupled to the housing 1801 and may support the display 1802. The supports 1840, 1850, and 1860 may be disposed to surround edges of the display 1802. The supports 1840, 1850, and 1860 may extend along the circumference of the housing 1801. The supports 1840, 1850, and 1860 may include a first support 1840 disposed in the first housing 1810, a second support 1850 disposed in the second housing 1820, and a third support 1860 disposed in the third housing 1830. The support 1840, 1850, or 1860 may be referred to as a "body." The support 1840, 1850, or 1860 may be referred to as a "frame." The support 1840, 1850, or 1860 may be referred to as a "sealing member." The support 1840, 1850, or 1860 may be referred to as a "peripheral part." The support 1840, 1850, or 1860 may be referred to as a "circumferential part." The support 1840, 1850, or 1860 may be referred to as a "peripheral structure." The support 1840, 1850, or 1860 may be referred to as a "circumferential structure."

According to an embodiment, the supports 1840, 1850, and 1860 may include a first support 1840. The first support 1840 may be disposed (or provided) between the first housing 1810 and the display 1802. The first support 1840 may be disposed along an edge of the first housing 1810. The first support 1840 may include a 1-1th support 1841 and a 1-2th support 1842. At least a portion of the display 1802 may be disposed between the 1-1th support 1841 and the 1-2th support 1842. The 1-1th support 1841 may be disposed (or provided) at one end portion of the first housing 1810, and the 1-2th support 1842 may be disposed (or provided) at the other end portion of the first housing 1810. Each of the first, second, and third supports 1840, 1850, and 1860 may be referred to as a "support." The support 1840, 1850, or 1860 may be referred to as a "deco," "finishing member," or "non-conductive member."

According to an embodiment, the supports 1840, 1850, and 1860 may include a second support 1850. The second support 1850 may be disposed (or provided) between the second housing 1820 and the display 1802. The second support 1850 may be disposed along an edge of the second housing 1820. The second support 1850 may include a 2-1th support 1851, a 2-2th support 1852, and a 2-3th support 1853. At least a portion of the display 1802 may be disposed between the 2-2th support 1852 and the 2-3th support 1853. The 2-1th support 1851 may connect the 2-2th support 1852 and the 2-3th support 1853. The 2-1th support 1851 may extend along an edge (e.g., the edge 1822 of FIG. 19) of the second housing 1820. The 2-1th support 1851 may be disposed (or provided) between the edge 1822 of the second housing 1820 and the display 1802. The 2-1th support 1851 may be referred to as a "support frame" or a "first support frame". Each of the 2-2th support 1852 and the 2-3th support 1853 may be referred to as a "second support frame".

According to an embodiment, the supports 1840, 1850, and 1860 may include a third support 1860. The third support 1860 may be disposed (or provided) between the third housing 1830 and the display 1802. The third support 1860 may be disposed along an edge of the third housing 1830. The third support 1860 may include a 3-1th support 1861, a 3-2th support 1862, and a 3-3th support 1863. At least a portion of the display 1802 may be disposed between the 3-2th support 1862 and the 3-3th support 1863. The 3-1th support 1861 may connect the 3-2th support 1862 and the 3-3th support 1863. The 3-1th support 1861 may extend along an edge (e.g., the edge 1832 of FIG. 19) of the third housing 1830. The 3-1th support 1861 may be disposed (or provided) between the edge 1832 of the third housing 1830 and the display 1802. The 3-1th support 1861 may be referred to as a "support frame" or a "first support frame." Each of the 3-2th support 1862 and the 3-3th support 1863 may be referred to as a "second support frame."

According to an embodiment, the first housing 1810 may include a 1-1th side portion 1811 and a 1-2th side portion 1812. The 1-1th side portion 1811 and the 1-2th side portion 1812 may form two opposite lateral sides, respectively, of the first housing 1810. The second housing 1820 may be coupled to the 1-1th side portion 1811. The third housing 1830 may be coupled to the 1-2th side portion 1812. The 1-1th side portion 1811 may be referred to as a "first coupling portion." The 1-2th side portion 1812 may be referred to as a "second coupling portion." The 1-1th side portion 1811 may be referred to as a "first portion." The 1-2th side portion 1812 may be referred to as a "second portion."

According to an embodiment, the second housing 1820 may include a 2-1th side portion 1821 and a 2-2th side portion 1822. The 2-1th side portion 1821 and the 2-2th side portion 1822 may form two opposite lateral sides, respectively, of the second housing 1820. The 2-1th side portion 1821 may be coupled to the first housing 1810. The 2-2th side portion 1822 may form a lateral side of the housing 1801. The 2-2th side portion 1822 may be referred to as an "edge". The 2-1th side portion 1821 may be referred to as a "third side portion". The 2-2th side portion 1822 may be referred to as a "fourth side portion".

According to an embodiment, the third housing 1830 may include a 3-1th side portion 1831 and a 3-2th side portion 1832. The 3-1th side portion 1831 and the 3-2th side portion 1832 may form two opposite lateral sides, respectively, of the third housing 1830. The 3-1th side portion 1831 may be coupled to the first housing 1810. The 3-2th side portion 1832 may form a lateral side of the housing 1801. The 3-2th side portion 1832 may be referred to as an "edge." The 3-1th side portion 1831 may be referred to as a "fifth side portion." The 3-2th side portion 1832 may be referred to as a "sixth side portion."

According to an embodiment, the electronic device 1800 may include a first hinge 1870 (or first hinge structure) and a second hinge 1880 (or second hinge structure). The first hinge 1870 may be disposed between the first housing 1810 and the second housing 1820. The first hinge 1870 may be disposed between the 1-1th side portion 1811 and the 2-1th side portion 1821. The first hinge 1870 may rotatably connect the first housing 1810 and the second housing 1820. The second hinge 1880 may be disposed between the first housing 1810 and the third housing 1830. The second hinge 1880 may be disposed between the 1-2th side portion 1812 and the 3-1th side portion 1831. The second hinge 1880 may rotatably connect the first housing 1810 and the third housing 1830.

According to an embodiment, the second housing 1820 may be rotated with respect to the first housing 1810. The first hinge 1870 may provide a center of rotation to the second housing 1820. The first hinge 1870 may connect the 1-1th side portion 1811 and the 2-1th side portion 1821. The third housing 1830 may be rotated with respect to the first housing 1810. The second hinge 1880 may provide a center of rotation to the third housing 1830. The second hinge 1880 may connect the 1-2th side portion 1812 and the 3-1th side portion 1831.

According to an embodiment, in the folded state of the electronic device 1800, each of the first, second, and third housings 1810, 1820, and 1830 may be arranged in one direction (e.g., the +Y direction). For example, the third housing 1830 may be disposed above the first housing 1810, and the second housing 1820 may be disposed above the third housing 1830. For example, the third housing 1830 may be disposed between the first housing 1810 and the second housing 1820.

According to an embodiment, the electronic device 1800 may include a first antenna 1815, a second antenna 1825, and a third antenna 1835. The first antenna 1815 may form a portion of the first housing 1810. The first antenna 1815 may form at least a portion of the surface of the first housing 1810. The second antenna 1825 may form a portion of the second housing 1820. The second antenna 1825 may form at least a portion of the surface of the second housing 1820. The third antenna 1835 may form a portion of the third housing 1830. The third antenna 1835 may form at least a portion of the surface of the third housing 1830.

According to an embodiment, the first antenna 1815 may include a 1-1th antenna portion 1815a, a 1-2th antenna portion 1815b, and a 1-3th antenna portion 1815c. The 1-1th antenna portion 1815a may be disposed between the 1-2th antenna portion 1815b and the 1-3th antenna portion 1815c. The first antenna 1815 may include a 1-1th segmented portion 1815d and a 1-2th segmented portion 1815e. The 1-1th antenna portion 1815a and the 1-2th antenna portion 1815b may be spaced apart from each other, and the 1-1th segmented portion 1815d may be disposed between the 1-1th antenna portion 1815a and the 1-2th antenna portion 1815b. The 1-1th antenna portion 1815a and the 1-3th antenna portion 1815c may be spaced apart from each other, and the 1-2th segmented portion 1815e may be disposed between the 1-1th antenna portion 1815a and the 1-3th antenna portion 1815c.

According to an embodiment, the second antenna 1825 may include a 2-1th antenna portion 1825a, a 2-2th antenna portion 1825b, and a 2-3th antenna portion 1825c. The 2-1th antenna portion 1825a may be disposed between the 2-2th antenna portion 1825b and the 2-3th antenna portion 1825c. The first antenna 1825 may include a 2-1th segmented portion 1825d and a 2-2th segmented portion 1825e. The 2-1th antenna portion 1825a and the 2-2th antenna portion 1825b may be spaced apart from each other, and the 2-1th segmented portion 1825d may be disposed between the 2-1th antenna portion 1825a and the 2-2th antenna portion 1825b. The 2-1th antenna portion 1825a and the 2-3th antenna portion 1825c may be spaced apart from each other, and the 2-2th segmented portion 1825e may be disposed between the 2-1th antenna portion 1825a and the 2-3th antenna portion 1825c.

According to an embodiment, the third antenna 1835 may include a 3-1th antenna portion 1835a, a 3-2th antenna portion 1835b, and a 3-3th antenna portion 1835c. The 3-1th antenna portion 1835a may be disposed between the 3-2th antenna portion 1835b and the 3-3th antenna portion 1835c. The third antenna 1835 may include a 3-1th segmented portion 1835d and a 3-2th segmented portion 1835e. The 3-1th antenna portion 1835a and the 3-2th antenna portion 1835b may be spaced apart from each other, and the 3-1th segmented portion 1835d may be disposed between the 3-1th antenna portion 1835a and the 3-2th antenna portion 1835b. The 3-1th antenna portion 1835a and the 3-3th antenna portion 1835c may be spaced apart from each other, and the 3-2th segmented portion 1835e may be disposed between the 3-1th antenna portion 1835a and the 3-3th antenna portion 1835c.

According to an embodiment, in the folded state of the electronic device 1800, the first housing 1810, the second housing 1820, and the third housing 1830 may be aligned with each other. For example, in the folded state of the electronic device 1800, the first housing 1810, the third housing 1830, and the second housing 1820 may be aligned in one direction (e.g., the +Z direction) in the described order. In the folded state of the electronic device 1800, the first antenna 1815, the second antenna 1825, and the third antenna 1835 may be aligned with each other. For example, in the folded state of the electronic device 1800, the first antenna 1815, the third antenna 1835, and the second antenna 1825 may be aligned in one direction (e.g., the +Z direction) in the described order. In the folded state of the electronic device 1800, the first antenna 1815, the second antenna 1825, and the third antenna 1835 may be aligned with each other in a direction (e.g., +Z direction) in which the housings 1810, 1820, and 1830 are stacked. For example, in the folded state of the electronic device 1800, the 1-1th antenna portion 1815a, the 2-1th antenna portion 1825a, and the 3-1th antenna portion 1835a may be aligned in the first direction (e.g., the +Z direction). For example, in the folded state of the electronic device 1800, the 1-2th antenna portion 1815b, the 2-2th antenna portion 1825b, and the 3-2th antenna portion 1835b may be aligned in the first direction (e.g., the +Z direction). For example, in the folded state of the electronic device 1800, the 1-3th antenna portion 1815c, the 2-3th antenna portion 1825c, and the 3-3th antenna portion 1835c may be aligned in the first direction (e.g., the +Z direction). For example, in the folded state of the electronic device 1800, the 1-1th segmented portion 1815d, the 2-1th segmented portion 1825d, and the 3-1th segmented portion 1835d may be aligned in the first direction (e.g., the +Z direction). For example, in the folded state of the electronic device 1800, the 1-2th segmented portion 1815e, the 2-2th segmented portion 1825e, and the 3-2th segmented portion 1835e may be aligned in the first direction (e.g., the +Z direction).

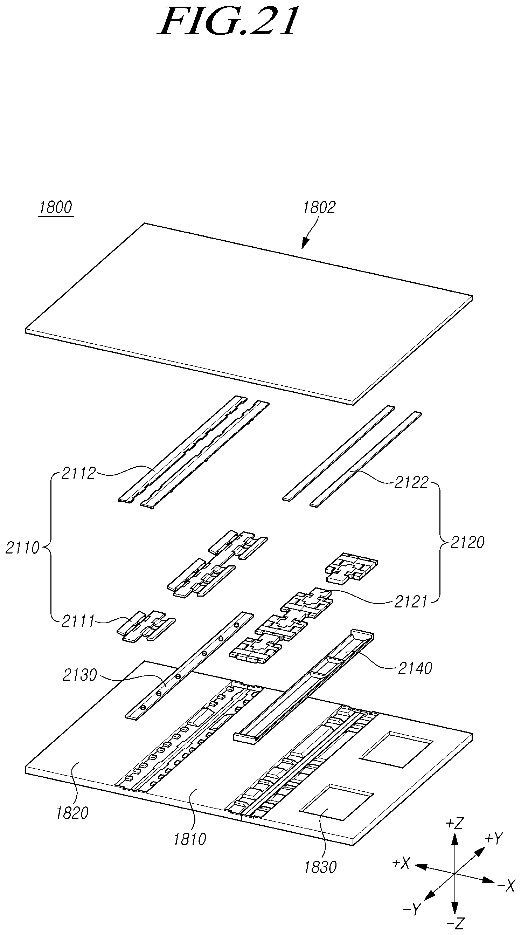

FIG. 21 is an exploded perspective view illustrating a multi-foldable electronic device according to an embodiment.

All features, components, and/or arrangement relationships between components illustrated in FIG. 21 may be included separately or in combination with the features, components, and arrangement relationships between components described in other drawings of the disclosure. Likewise, all features, components, and/or arrangement relationships between components described in connection with FIGS. 1 to 20 may be included separately or in combination with the features, components, and arrangement relationships between components described in connection with FIG. 21.

Referring to FIG. 21, an electronic device 1800 (e.g., the electronic device 101 of FIG. 1) according to an embodiment may include a display 1802 and a housing 1810, 1820, 1830. The display 1802 may be seated on the housing 1810, 1820, 1830. The display 1802 may be disposed on the housing 1810, 1820, 1830 to be at least partially deformed. The housing 1810, 1820, 1830 may include a first housing 1810, a second housing 1820, and a third housing 1830. The first housing 1810 and the second housing 1820 may be rotatably coupled to each other. The first housing 1810 and the third housing 1830 may be rotatably coupled to each other. The second housing 1820 may be referred to as a "third housing," and the third housing 1830 may be referred to as a "second housing."

According to an embodiment, the electronic device 1800 may include a first hinge structure 2110 and a second hinge structure 2120. The first hinge structure 2110 may rotatably connect the first housing 1810 and the second housing 1820. The second hinge structure 2120 may rotatably connect the first housing 1810 and the third housing 1830. The first hinge structure 2110 may have a width larger than that of the second hinge structure 2120. The width of the first hinge structure 2110 in one direction (e.g., +Z direction) may be larger than the width of the second hinge structure 2120 in one direction (e.g., +Z direction). The first hinge structure 2110 may be referred to as a 'wide hinge.' The second hinge structure 2120 may be referred to as a "narrow hinge." Each of the first hinge structure 2110 and the second hinge structure 2120 may be referred to as a 'hinge.' Each of the first hinge structure 2110 and the second hinge structure 2120 may be referred to as a 'hinge assembly.'

According to an embodiment, the electronic device 1800 may include a first hinge housing 2130 disposed to receive a first hinge structure 2110. The electronic device 1800 may include a second hinge housing 2140 disposed to receive a second hinge structure 2120.

According to an embodiment, the first hinge structure 2110 may include at least one first hinge module 2111. At least a portion of the first hinge module 2111 may be received in the first hinge housing 2130.

According to an embodiment, the first hinge structure 2110 may include a first support plate 2112. The first support plate 2112 may be disposed on the first hinge module 2111. The first support plate 2112 may be disposed between the first hinge module 2111 and the display 1802. The first support plate 2112 may support the display 1802. The first hinge module 2111 may rotate the first support plate 2112.

According to an embodiment, the second hinge structure 2120 may include at least one second hinge module 2121. At least a portion of the second hinge module 2121 may be received in the second hinge housing 2140. The second hinge module 2121 may have a width larger than that of the first hinge module 2111.

According to an embodiment, the second hinge structure 2120 may include a second support plate 2122. The second support plate 2122 may be disposed on the second hinge module 2121. The second support plate 2122 may be disposed between the second hinge module 2121 and the display 1802. The second support plate 2122 may support the display 1802. The second hinge module 2121 may rotate the second support plate 2122.

According to an embodiment, the first hinge module 2111 may be configured so that a gap between gears varies according to the rotational operation. According to an embodiment, the second hinge module 2121 may be configured so that a gap between gears varies according to the rotational operation. The first hinge module 2111 and/or the second hinge module 2121 may be substantially identical or similar to the hinge module 500 or 1500 of FIGS. 5 to 17B. For example, the first hinge module 2111 and the second hinge module 2121 may be configured to reduce the gap between the shaft-associated gear and the idle gear in the intermediate state between the first state and the second state in the rotational operation of the hinge module described with reference to FIGS. 11A to 11F to enhance the gap in the intermediate state.

An electronic device according to an embodiment may comprise a foldable housing 210, 220 including a first housing 210 and a second housing 220, a hinge structure 300 connecting the first housing 210 and the second housing 220, and a flexible display 260 supported by the first housing 210 and the second housing 220. The hinge structure 300 may include a first gear 511 including a first hollow portion 5111 and a first shaft extension 5112 protruding axially along the periphery of the first hollow portion 5111, a second gear 512 including a second hollow portion 5121 and a second shaft extension 5122 protruding axially along the periphery of the second hollow portion 5121, a pair of idle gears 513 arranged to mesh with the first gear 511 and the second gear 512, and a gear bracket 530 including a first gear insertion hole 531 formed to receive the first shaft extension 5112 and a second gear insertion hole 532 formed to receive the second shaft extension 5122. The first shaft extension 5112 may be configured to move within the first gear insertion hole 531 in a direction perpendicular to the axial direction of the first gear 511 and toward the idle gears 513 according to the rotational position of the first gear 511.

According to an embodiment, the foldable housing 210, 220 may be variable to a folded state, an intermediate state, and an unfolded state by the hinge structure 300. When the foldable housing 210, 220 is in the intermediate state, the first shaft extension 5112 may press against the periphery of the first gear insertion hole 531, causing the first gear 511 to move toward the idle gears 513.

According to an embodiment, the foldable housing 210, 220 may be variable to a folded state, an intermediate state, and an unfolded state by the hinge structure 300. When the foldable housing 210, 220 is in the folded or unfolded state, a gap may be formed between the first gear 511 and the idle gears 513.

According to an embodiment, the foldable electronic device 101, 200 may further comprise a first arm 540 coupled to rotate together with the rotation of the first gear 511, and a second arm 550 coupled to rotate together with the rotation of the second gear 512.

According to an embodiment, the first arm 540 may include a first arm extension 541 extending along the axial direction of the first gear 511. The second arm 550 may include a second arm extension 551 extending along the axial direction of the second gear 512.

According to an embodiment, the foldable electronic device 101, 200 may further comprise a support bracket 560 including a first arm insertion hole 561 formed to receive the first arm extension 541 and a second arm insertion hole 562 formed to receive the second arm extension 551. The first arm extension 541 may move within the first arm insertion hole 561 in a direction perpendicular to the axial direction of the first arm extension 541 and toward the idle gears 513 according to the rotational position of the first arm 540.

According to an embodiment, the peripheral surface of the first arm extension 541 and the peripheral surface of the first shaft extension 5112 may be formed to align in the same shape when viewed in the axial direction of the first gear 511.

According to an embodiment, the shape of the first arm insertion hole 561 and the shape of the first gear insertion hole 531 may be formed to align in the same shape when viewed in the axial direction of the first gear 511.

An electronic device according to an embodiment may comprise a foldable housing 210, 220 including a first housing 210 and a second housing 220, a hinge structure 300 connecting the first housing 210 and the second housing 220, and a flexible display 260 supported by the first housing 210 and the second housing 220. The hinge structure 300 may include a first gear 511 including a first hollow portion 5111 and a first shaft extension 5112 protruding axially along the periphery of the first hollow portion 5111, a second gear 512 including a second hollow portion 5121 and a second shaft extension 5122 protruding axially along the periphery of the second hollow portion 5121, a pair of idle gears 513 arranged to mesh with the first gear 511 and the second gear 512, and a gear bracket 530 including a first gear insertion hole 531 formed to receive the first shaft extension 5112 and a second gear insertion hole 532 formed to receive the second shaft extension 5122. A circumference of the first gear insertion hole 531 may form a first pressed portion 531a and a first curved portion 531b extending from two opposite ends of the first pressed portion 531a. An outer circumferential surface of the first shaft extension 5112 may include, in a cylindrical shape, a first recessed portion 5112a and a second recessed portion 5112b, which are spaced apart from each other, and a first pressing portion 5112c positioned between the first recessed portion 5112a and the second recessed portion 5112b. When the first pressing portion 5112c is positioned on the first pressed portion 531a, the first gear 511 may be configured to move toward the idle gear 513.

According to an embodiment, the first gear 511 may be positioned closer to the idle gear 513 when the first recessed portion 5112a and the second recessed portion 5112b do not contact the first pressed portion 531a than when the first recessed portion 5112a or the second recessed portion 5112b contacts the first pressed portion 531a.

According to an embodiment, at least one of the first recessed portion 5112a and the second recessed portion 5112b may be flat.

According to an embodiment, the first gear insertion hole 531 may have a space in which the first shaft extension 5112 is movable within the first gear insertion hole 531 in a direction perpendicular to the axial direction of the first gear 511 and toward the idle gears 513.

According to an embodiment, the foldable housing 210, 220 may be variable to a folded state, an intermediate state, and an unfolded state by the hinge structure 300. In the intermediate state, the first pressing portion 5112c of the first shaft extension 5112 may be configured to be positioned on the first pressed portion 531a of the first gear insertion hole 531.

According to an embodiment, the foldable housing 210, 220 may be variable to a folded state, an intermediate state, and an unfolded state by the hinge structure 300. In the folded state, the first recessed portion 5112a of the first shaft extension 5112 may be configured to be positioned on the first pressed portion 531a of the first gear insertion hole 531. In the unfolded state, the second recessed portion 5112b of the first shaft extension 5112 may be configured to be positioned on the first pressed portion 531a of the first gear insertion hole 531.

According to an embodiment, the foldable electronic device 101, 200 may further comprise a first arm 540 coupled to rotate together with the rotation of the first gear 511, and a second arm 550 coupled to rotate together with the rotation of the second gear 512.

According to an embodiment, the first arm 540 may include a first arm extension 541 extending along the axial direction of the first gear 511. The second arm 550 may include a second arm extension 551 extending along the axial direction of the second gear 512.

According to an embodiment, the foldable electronic device 101, 200 may further comprise a support bracket including a first arm insertion hole 561 formed to receive the first arm extension 541 and a second arm insertion hole 562 formed to receive the second arm extension 551. The first arm extension 541 may move within the first arm insertion hole 561 in a direction perpendicular to the axial direction of the first arm extension 541 and toward the idle gears 513 according to the rotational position of the first arm 540.

According to an embodiment, the peripheral side (e.g., surface) of the first arm extension 541 and the peripheral surface of the first shaft extension 5112 may be formed to align in the same shape when viewed in the axial direction of the first gear 511.

According to an embodiment, the shape of the first arm insertion hole 561 and the shape of the first gear insertion hole 531 may be formed to align in the same shape when viewed in the axial direction of the first gear 511.

According to an embodiment, the foldable electronic device may be configured to mitigate a gap that occurs when the foldable housing 210, 220 rotates around the hinge structure 300 by reducing a gap formed between the first gear 511 and the idle gear 513 as the first gear 511 moves toward the idle gear 513.

According to a first example of the disclosure, there is provided an electronic device comprising: a foldable housing including a first housing 210 and a second housing 220; and a hinge structure 300 configured to rotatably connect the first housing and the second housing; and wherein the hinge structure includes: a first arm structure including a first gear 511 and a first extension 5112, 541, 1541 configured to protrude axially along the periphery of a first opening 5111, 550a formed in the first arm structure; a second arm structure including a second gear 512 and a second extension 5122, 551, 1551 configured to protrude axially along the periphery of a second opening 5121, 550b formed in the first arm structure; a pair of idle gears 513 comprising a first idle gear 513 configured to mesh with the first gear and a second idle gear 513 configured to mesh with the second gear; and a first bracket 530, 560, 1523 including a first insertion hole 531, 561, 1523a to receive the first extension and a second insertion hole 532, 562, 1523b to receive the second extension, and wherein the first extension is configured to move within the first insertion hole in a direction perpendicular to the axial direction of the first gear to move the first gear toward or away from the first idle gear, according to a rotation of the first gear.

According to a second example of the present disclosure, there is provided the electronic device of the first example, wherein: the first extension is a first shaft extension 5112 of the first gear, the second extension is a second shaft extension 5122 of the second gear, the first insertion hole is a first gear insertion hole 531, the second insertion hole is a second gear insertion hole 532, and the first bracket is a gear bracket 530; or the first extension is a first arm extension 541, 1541, the second extension is a second arm extension 551, 1551, the first insertion hole is a first arm insertion hole 561, 1523a, the second insertion hole is a second arm insertion hole 562, 1523b, and the first bracket is a support bracket 560 or a support plate 1523.

According to a third example of the present disclosure, there is provided the electronic device of the first example or the second example, wherein the first arm structure comprises a first arm 540 configured to rotate together with the rotation of the first gear, and wherein the second arm structure comprises a second arm 550 configured to rotate together with the rotation of the second gear.

According to a fourth example of the present disclosure, there is provided the electronic device of any one of the first example to the third example, wherein the first arm structure includes a third extension 5112, 541, 1541 extending along the axial direction of the first gear, and wherein the second arm structure includes a fourth arm extension 5122, 551, 1551 extending along the axial direction of the second gear.

According to a fifth example of the present disclosure, there is provided the electronic device of the fourth example, further comprising: a second bracket 560 including a third insertion hole 531, 561, 1523a formed to receive the third extension and a fourth insertion hole 532, 562, 1523b formed to receive the fourth extension, and wherein the third extension moves within the third insertion hole in a direction perpendicular to the axial direction of the third extension and toward the first idle gear according to a rotation of the first arm.

According to a sixth example of the present disclosure, there is provided the electronic device of the fifth example, wherein the peripheral surface of the third extension and the peripheral surface of the first extension are formed to align in the same shape when viewed in the axial direction of the first gear.

According to a seventh example of the present disclosure, there is provided the electronic device of the fifth example or sixth example, wherein the shape of the third insertion hole and the shape of the first insertion hole are formed to align in the same shape when viewed in the axial direction of the first gear.

According to an eighth example of the present disclosure, there is provided the electronic device of any one of the fourth example to the seventh example, wherein the first extension is included in one of the first arm or the first gear, and the third extension is included in the other one of the first arm or the first gear; and wherein the second extension is included in one of the second arm or the second gear, and the fourth extension is included in the other one of the second arm or the second gear.

According to a ninth example of the present disclosure, there is provided the electronic device of any one of the first example to the eighth example, wherein the hinge structure is configured to rotatably couple the first housing and the second housing such that the foldable housing is adjustable or modifiable between a folded state, an unfolded state, and an intermediate state between the folded state and the unfolded state, and wherein: when the foldable housing is rotated from the folded state or the unfolded state to the intermediate state, a protrusion of the first extension presses against the periphery of the first insertion hole causing the first gear to move toward the first idle gear), and/or when the foldable housing is in the folded or unfolded state, a gap is formed between the first gear and the first idle gear.

According to a tenth example of the present disclosure, there is provided the electronic device of any one of the first example to the eighth example, wherein a circumference of the first insertion hole includes a first deformed portion 531a, 561a, 1523a-1 and a first curved portion 531b, 561b, 1523a-2 extending from two opposite ends of the first deformed portion, wherein a circumferential surface of the first extension includes, e.g. in a cylindrical or substantially cylindrical shape, a first recessed portion 5112a, 541a, 1541a, a second recessed portion 5112b, 541b, 1541b, and a first pressing portion 5112c, 541c, 1541c positioned between the first recessed portion and the second recessed portion, and wherein, when the first pressing portion is rotated to contact the first deformed portion, the first gear is configured to move toward the first idle gear.

According to a eleventh example of the present disclosure, there is provided the electronic device of the tenth example, wherein the first gear is positioned closer to the first idle gear when the first pressing portion contacts the first deformed portion than when the first recessed portion or the second recessed portion contacts the first deformed portion.

According to a twelfth example of the present disclosure, there is provided the electronic device of the tenth example or the eleventh example, wherein at least one of the first recessed portion, the second recessed portion, and the first deformed portion is flat.

According to a thirteenth example of the present disclosure, there is provided the electronic device of any one of the tenth example to the twelfth example, wherein the first insertion hole includes a space in which the first extension is movable in a direction perpendicular to the axial direction of the first gear and toward the first idle gear.

According to a fourteenth example of the present disclosure, there is provided the electronic device of any one of the tenth example to the thirteenth example, wherein the hinge structure is configured to rotatably couple the first housing and the second housing such that the foldable housing is adjustable or modifiable between a folded state, an unfolded state, and an intermediate state between the folded state and the unfolded state, and wherein at least one of: when the foldable housing is in the intermediate state, the first pressing portion of the first extension is configured to be positioned on the first deformed portion of the first insertion hole; when the foldable housing is in the folded state, the first recessed portion of the first extension is configured to be positioned adjacent to the first deformed portion of the first insertion hole; and when the foldable housing is in the unfolded state, the second recessed portion of the first extension is configured to be positioned adjacent to the first deformed portion of the first insertion hole.

According to a fifteenth example of the present disclosure, there is provided the electronic device of any one of the first example to the fourteenth example, further comprising a flexible display provided or disposed across a surface of the first housing and a surface of the second housing.

According to a sixteenth example of the present disclosure, there is provided the electronic device of any one of the first example to the fifteenth example, wherein the foldable housing comprises a third housing, wherein the electronic device comprises another hinge structure configured to rotatably connect the first housing to the third housing (e.g. the other hinge structure being positioned at an opposite side of the first housing to the hinge structure), and wherein the other hinge structure is configured the same (or substantially the same) as the hinge structure.

The terms as used herein are provided merely to describe some embodiments thereof, but are not intended to limit the disclosure. As used herein, the singular forms "a," "an," and "the" are intended to include the plural forms as well, unless the context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, the terms "first" and "second" may modify various components regardless of importance and/or order and are used to distinguish a component from another without limiting the components.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a 'device configured (or set) to perform A, B, and C' may be a dedicated device to perform the corresponding operation or may mean a general-purpose device capable of various operations including the corresponding operation.

Meanwhile, the terms "upper side", "lower side", and "front and rear directions" used in the disclosure are defined with respect to the drawings, and the shape and position of each component are not limited by these terms.

In the disclosure, the above-described description has been made mainly of specific embodiments, but the disclosure is not limited to such specific embodiments, but should rather be appreciated as covering all various modifications, equivalents, and/or substitutes of various embodiments.

## Claims

1. An electronic device comprising:
a foldable housing (210, 220) including a first housing (210) and a second housing (220); and
a hinge structure (300) configured to rotatably connect the first housing (210) and the second housing (220); and
a flexible display (260) supported by the first housing (210) and the second housing (220),
wherein the hinge structure (300) includes:
a first gear (511) including a first hollow portion (5111) and a first shaft extension (5112) protruding axially along the periphery of the first hollow portion (5111);
a second gear (512) including a second hollow portion (5121) and a second shaft extension (5122) protruding axially along the periphery of the second hollow portion (5121);
a pair of idle gears (513) configured to mesh with the first gear (511) and the second gear (512); and
a gear bracket (530) including a first gear insertion hole (531) to receive the first shaft extension (5112) and a second gear insertion hole (532) to receive the second shaft extension (5122), and
wherein the first shaft extension (5112) is configured to move within the first gear insertion hole (531) in a direction perpendicular to the axial direction of the first gear (511) to move the first gear (511) toward or away from the idle gears (513), according to a rotation of the first gear (511).

2. The electronic device of claim 1,
wherein the foldable housing (210, 220) is variable to a folded state, an intermediate state, and an unfolded state by the hinge structure (300), and
wherein, when the foldable housing (210, 220) is in the intermediate state, the first shaft extension (5112) presses against the periphery of the first gear insertion hole (531), causing the first gear (511) to move toward the idler gears (513).

3. The electronic device of claim 1,
wherein the foldable housing (210, 220) is variable to a folded state, an intermediate state, and an unfolded state by the hinge structure (300), and
wherein, when the foldable housing (210, 220) is in the folded or unfolded state, a gap is formed between the first gear (511) and the idler gears (513).

4. The electronic device of any one of claims 1 to 3, further comprising
a first arm (540) configured to rotate together with the rotation of the first gear (511), and
a second arm (550) configured to rotate together with the rotation of the second gear (512).

5. The electronic device of claim 4,
wherein the first arm (540) includes a first arm extension (541) extending along the axial direction of the first gear (511), and
wherein the second arm (550) includes a second arm extension (551) extending along the axial direction of the second gear (512).

6. The electronic device of claim 5, further comprising
a support bracket (560) including a first arm insertion hole (561) formed to receive the first arm extension (541) and a second arm insertion hole (562) formed to receive the second arm extension (551), and
wherein the first arm extension (541) moves within the first arm insertion hole (561) in a direction perpendicular to the axial direction of the first arm extension (541) and toward the idle gears (513) according to the rotational position of the first arm (540).

7. The electronic device of claim 6,
wherein the peripheral surface of the first arm extension (541) and the peripheral surface of the first shaft extension (5112) are formed to align in the same shape when viewed in the axial direction of the first gear (511).

8. The electronic device of claim 6 or 7,
wherein the shape of the first arm insertion hole (561) and the shape of the first gear insertion hole (531) are formed to align in the same shape when viewed in the axial direction of the first gear (511).

9. The foldable electronic device of any one of claims 1 to 8,
wherein a circumference of the first gear insertion hole (531) forms a first pressed portion (531a) and a first curved portion (531b) extending from two opposite ends of the first pressed portion (531a),
wherein an outer circumferential surface of the first shaft extension (5112) includes, in a cylindrical shape, a first recessed portion (5112a) and a second recessed portion (5112b), which are spaced apart from each other, and a first pressing portion (5112c) positioned between the first recessed portion (5112a) and the second recessed portion (5112b), and
wherein when the first pressing portion (5112c) is positioned on the first pressed portion (531a), the first gear (511) is configured to move toward the idler gears (513).

10. The foldable electronic device of claim 9,
wherein the first gear (511) is positioned closer to the idler gears (513) when the first recessed portion (5112a) and the second recessed portion (5112b) do not contact the first pressed portion (531a) than when the first recessed portion (5112a) or the second recessed portion (5112b) contacts the first pressed portion (531a).

11. The foldable electronic device of claim 9 or 10,
wherein at least one of the first recessed portion (5112a) and the second recessed portion (5112b) is flat.

12. The foldable electronic device of any one of claims 9 to 11,
wherein the first gear insertion hole (531) has a space in which the first shaft extension (5112) is movable within the first gear insertion hole (531) in a direction perpendicular to the axial direction of the first gear (511) and toward the idler gears (513).

13. The foldable electronic device of any one of claims 9 to 12,
wherein the hinge structure (300) is configured to rotatably couple the first housing (210) and the second housing (220) such that the foldable housing (210, 220) is adjustable between a folded state, an unfolded state, and an intermediate state between the folded state and the unfolded state, and
wherein, when the foldable housing (210, 220) is in the intermediate state, the first pressing portion (5112c) of the first shaft extension (5112) is configured to be positioned on the first pressed portion (531a) of the first gear insertion hole (531).

14. The foldable electronic device of any one of claims 9 to 12,
wherein the hinge structure (300) is configured to rotatably couple the first housing (210) and the second housing (220) such that the foldable housing (210, 220) is adjustable between a folded state, an unfolded state, and an intermediate state between the folded state and the unfolded state, and
wherein in the folded state, the first recessed portion (5112a) of the first shaft extension (5112) is configured to be positioned on the first pressed portion (531a) of the first gear insertion hole (531), and
wherein in the unfolded state, the second recessed portion (5112b) of the first shaft extension (5112) is configured to be positioned on the first pressed portion (531a) of the first gear insertion hole (531).

15. The foldable electronic device of any one of claims 9 to 14,
wherein the foldable electronic device is configured to mitigate a gap that occurs when the foldable housing (210, 220) rotates around the hinge structure (300) by reducing a gap formed between the first gear (511) and the idler gears (513) as the first gear (511) moves toward the idle gears (513).
